# EUROPEAN PATENT SPECIFICATION

(11) **EP 1 682 377 B1**
(45) Date of publication and mention of the grant of the patent: **02.03.2011**
(21) Application number: 04755401.9
(22) Date of filing: 16.06.2004
(51) Int. Cl.: F16H 59/02

(54) **VEHICLE SHIFTER**
FAHRZEUGSCHALTHEBEL
LEVIER DE VITESSES DE VEHICULE

(30) Priority: 13.10.2003 US 511421 P; 08.04.2004 US 820424
(43) Date of publication of application: 26.07.2006
(73) Proprietor: GHSP, DIVISION OF JSJ CORPORATION, Grand Haven, Michigan 49417 (US)
(72) Inventor: DE JONGE, Robert A., West Olive, Michigan 49460 (US); HAWVER, Dennis M., Grand Haven, Michigan 49417 (US); MITTEER, David M., Shelby, Michigan 49455 (US); BRATKOWSKI, Edward J., Washington Twp., Michigan 48094 (US); BRYANT, Eric W., Nunica, Michigan 49455 (US); FISHER, Daniel J., West Olive, Michigan 49460 (US); WOLFFIS, Craig A., Grand Haven, Michigan 49417 (US); MOSS, Mark A., Grand Haven, Michigan 49417 (US)
(74) Representative: Miller, James Lionel Woolverton
(86) International application number: PCT/US2004/019212
(87) International publication number: WO 2005/039914

(56) References cited:
- US-A- 5 167 308
- US-A- 5 251 723
- US-A- 5 489 246
- US-A- 5 677 658
- US-A- 5 791 197
- US-A- 5 827 149
- US-B1- 6 209 408

## Description

### BACKGROUND OF THE INVENTION

The present invention relates to shifters for motor vehicle transmissions. Various types of shifters have been developed for controlling both manual and automatic transmissions in motor vehicles. Shifters for controlling automatic transmissions commonly include a shift lever that is movable to a variety of positions such as PARK, NEUTRAL, DRIVE or the like. A mechanical release including a button in the shift handle is commonly used to release a pawl that retains the shifter in the selected gear shift position. Such pawl mechanisms may be complicated, requiring numerous parts. Also, the shift lever and handle must be configured to accommodate the mechanical linkage, such that the design of the shift lever and handle is constrained.

US Patent 6209408 discloses the preamble of Claim 1.

### SUMMARY OF THE INVENTION

The invention is set out in Claim 1.

A preferred construction provides a shifter assembly for controlling the transmission of a motor vehicle. The shifter assembly includes a base configured to be mounted to a motor vehicle. A shift lever is movably mounted to the base, and the shift lever is movable to a plurality of discreet positions including at least a PARK position and a REVRSE position and a forward gear position such as DRIVE for providing an output for controlling a transmission according to the position of the shift lever. A shift gate is fixed to a selected one of the base and the shift lever, and has at least PARK, REVERSE and forward gear positions. The shifter assembly further includes an electrically powered pawl mechanism fixed to the other of the base and the shift lever. The pawl mechanism has a pawl member shiftable between a disengaged position, and an engaged position wherein the pawl member engages a selected one of the gear positions of the shift gate and at least partially restrains movement of the shift lever.

Another preferred construction provides a shifter assembly for controlling a transmission. The shifter assembly includes a base configured to be mounted in a vehicle. A shift lever is pivotably mounted to the base, and the shift lever includes a shift gate with at least PARK, REVERSE, and DRIVE gear positions. The shift gate moves with the shift lever. The shifter assembly also includes a pawl mechanism including a powered actuator and a pawl mechanism shiftable by the powered actuator between an engaged position wherein the pawl member at least partially restrains movement of the shift lever, and a disengaged position permitting movement between the gear positions.

Another preferred construction provides a shifter for controlling the transmission of a motor vehicle. The shifter includes a base and a shift lever movably mounted to the base. A shift gate is mounted on a selected one of the base and the shift lever. The shift gate has a plurality of transmission control positions. The shifter includes a powered pawl mounted on the other of the base and the shift lever for selectively engaging the transmission control positions to restrict movement of the shift lever.

These and other features, advantages, and objects of the present invention will be further understood and appreciated by those skilled in the art by reference to the following specification, claims, and appended drawings.

### BRIEF DESCRIPTION OF THE DRAWINGS

Fig. 1 is a partially fragmentary perspective view of a shifter according to one aspect of the present invention;

Fig. 2 is a fragmentary, cross-sectional view of a shifter of Fig. 1;

Fig. 3 is a partially schematic cross-sectional view of the shifter of Fig. 1;

Fig. 4 is a cross-sectional view of the shifter of Fig. 1;

Fig. 5 is a fragmentary view of the pawl mechanism of the shifter of Fig. 1;

Fig. 6 is a fragmentary perspective view of another embodiment of a shifter according to the present invention wherein the pawl is mounted in the shift lever;

Fig. 7 is a side view of another embodiment of a shifter wherein the pawl is mounted in the shift lever;

Fig. 8 is an end view of the shifter of Fig. 7;

Fig. 9 is a fragmentary perspective view illustrating a manual release mechanism for disengaging the pawl;

Fig. 10 is a fragmentary view illustrating the pawl and shift gate;

Fig. 11 is a fragmentary, exploded perspective view illustrating assembly of the shift handle and knob;

Fig. 12 is a fragmentary, perspective view illustrating another embodiment of the shifter of the present invention, wherein the shifter includes manual upshift and downshift gear positions;

Fig. 13 is a schematic illustration of a shift pattern according to one aspect of the present invention;

Fig. 14 is a schematic illustration of a shift pattern according to another aspect of the present invention;

Fig. 15 is a schematic illustration of a shift pattern according to another aspect of the present invention;

Fig. 16 is a schematic illustration of a shift pattern according to another aspect of the present invention;

Fig. 16A is a schematic illustration of a shift pattern according to another aspect of the present invention;

Fig. 17 is a partially schematic view of a mechanical PARK lock cam;

Fig. 18 is a partially schematic view of the mechanical PARK lock cam of Fig. 17;

Fig. 19 is a partially schematic view of another embodiment of a shifter according to the present invention;

Fig. 20 is a fragmentary, enlarged view of a portion of the shifter of Fig. 19;

Fig. 21 is a fragmentary view of a shift lever assembly according to another aspect of the present invention;

Fig. 22 is a partially schematic view of a toggle mechanism that may be utilized in conjunction with the electronic pawl according to the present invention;

Fig. 23 is a partially fragmentary perspective view of a shifter with an electronic pawl according to another aspect of the present invention;

Fig. 24 is a perspective view of the internal components of the shifter of Fig. 23;

Fig. 25 is a perspective view of the internal components of the shifter of Fig. 23;

Fig. 26 is a partially schematic cross-sectional view of a shifter according to another aspect of the present invention;

Fig. 27 is a view of the top plate of the shifter of Fig. 26;

Fig. 28 is a plane view of the upper housing of the shifter of Fig. 26;

Fig. 29 is a cross-sectional view of the upper housing of Fig. 28 taken along the line XXIX-XXIX; Fig. 28;

Fig. 30 is a fragmentary, cross-sectional view of another embodiment of a ball utilized with a shifter of the type illustrated in Fig. 26;

Fig. 31 is a fragmentary, cross-sectional view of the ball of Fig. 30 taken along the line XXXI-XXXI;

Fig. 32 is a bottom view of the ball of Fig. 31;

Fig. 33 is a partially fragmentary perspective view of a shifter according to another aspect of the present invention;

Fig. 34 is a partially fragmentary perspective view of the shifter of Fig. 33;

Fig. 35 is an exploded view of a solenoid according to another aspect of the present invention;

Fig. 36 is a plane view of the solenoid of Fig. 35;

Fig. 37 is a cross-sectional view of the solenoid taken along the line XXXVII-XXXVII; and

Fig. 38 is a side view of the solenoid of Fig. 35.

### DETAILED DESCRIPTION OF PREFERRED EMBODIMENT

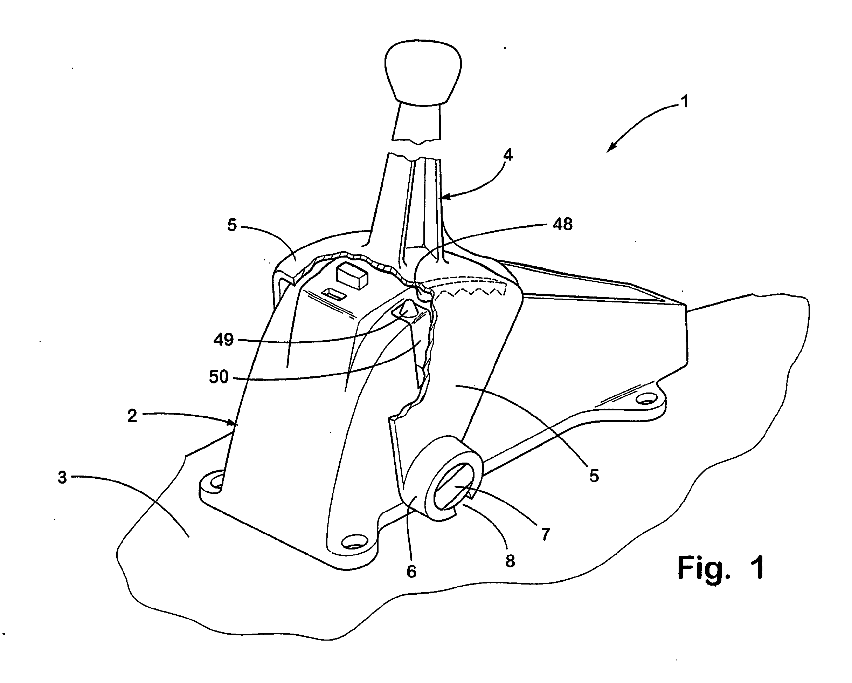

For purposes of description herein, the terms "upper," "lower," "right," "left," "rear," "front," "vertical," "horizontal," and derivatives thereof shall relate to the invention as oriented in Fig. 1. However, it is to be understood that the invention may assume various alternative orientations and step sequences, except where expressly specified to the contrary. It is also to be understood that the specific devices and processes illustrated in the attached drawings and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The present application is related to Application No. 10/762,837, filed on January 22, 2004, published as US 2004/0227604, entitled SOLENOID WITH NOISE REDUCTION, the present application is also related to Application No. 10/799,111, filed on March 12, 2004, published as US 2004/0222726 entitled SHIFTER WITH GEAR POSITION INDICATOR.

A shifter assembly 1 according to one aspect of the present invention is illustrated in Fig. 1. The shifter assembly 1 includes a base 2 configured to be mounted to the interior 3 of a motor vehicle. A shift lever 4 is movably mounted to the base, and includes a pair of downwardly extending members 5, each of which includes a hub 6 that rotatably engages a pin 7. The pin 7 has a non-circular cross-section with flats 9 that permit the shift lever 4 to be assembled or disassembled by rotation of pin 7 into alignment with opening 8 in hub 6.

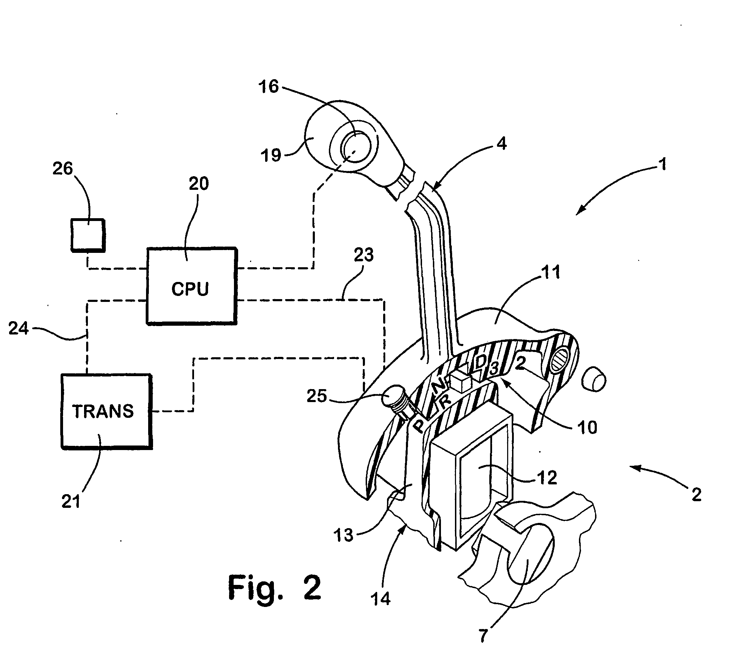

With further reference to Fig. 2, shift lever 4 includes a shift gate 10 that is integrally formed on the underside of the lower portion 11 of the shift lever 4. A powered pawl mechanism 14 includes a powered actuator such as a solenoid 12 that is mounted to the base 2 by a retaining portion 13 of base 2. The solenoid 12 includes a spring that normally biases the pawl member 15 upwardly into engagement with the shift gate 10. Alternately, as discussed in more detail below, a magnet may also be utilized in the solenoid either by itself or in combination with a spring to bias/retain the pawl in the engaged position. The powered actuator could also comprise an electric motor and linear drive mechanism or other powered actuator. Such powered actuators may be utilized to control the distance of travel of the pawl member 15. For example, the power to a solenoid can be used to control the distance of travel. Alternately, if an electrical motor is used, the number of revolutions of the motor can be utilized to control the distance of travel of the pawl member 15.

When electrically actuated, the solenoid 12 shifts the pawl 15 downwardly out of engagement with the shift gate 10, such that a user can rotate the shift lever 4 to a new gear position. An operator input device such as a button 16 on shift knob 19 is electrically connected to a controller 20, such that a user pushes button 16, and controller 20 generates a signal to the solenoid 12 to thereby shift the pawl 15 out of engagement with the shift gate 10 to permit movement of the shift lever 4. Alternately, switch 16 could be connected in series with the brake and key circuit such that the button completes the circuit when depressed and actuates the solenoid. Also, other operator input devices such as small levers, slidable/rotatable members, switches, sensors, or the like could be utilized instead of button 16 to provide user input. A conventional mechanical cable 22 may be connected to the vehicle transmission 21 to provide for transmission gear position change upon movement of the shift lever 4. Alternately, an electrical signal corresponding to the position (e.g. PARK, NEUTRAL, DRIVE, etc.) of the shift lever 4 may be generated by sensors 40 in the shifter assembly 1 and transmitted to the controller 20 through an electrical line 23, such that the controller 20 then generates a signal that controls the transmission 21 via electrical line 24. This electrical signal may be utilized by itself or in combination with the mechanical cable 22 to control the vehicle transmission.

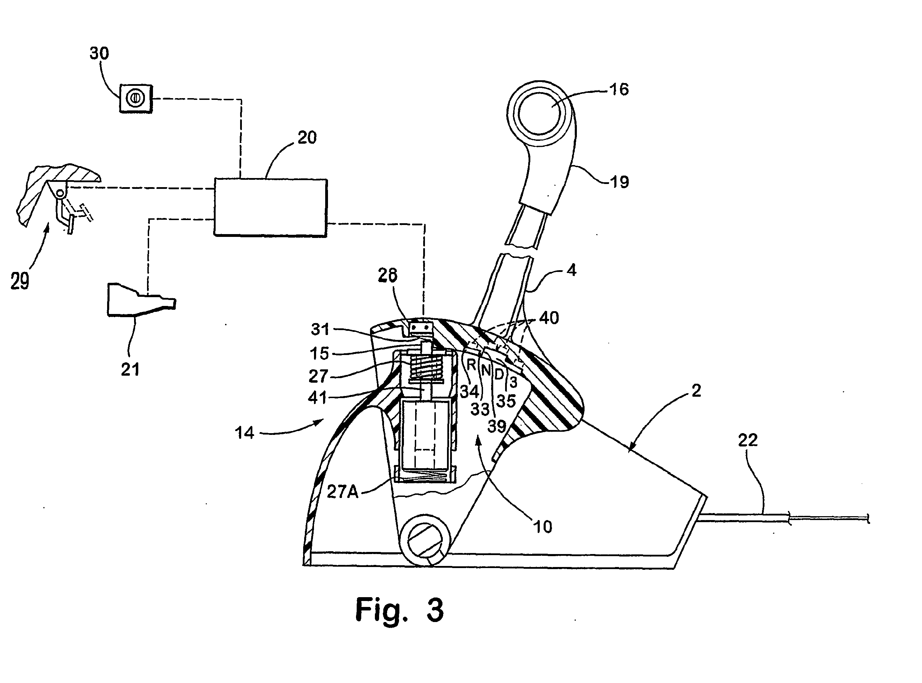

With further reference to Fig. 3, a spring 27 in pawl mechanism 14 biases the pawl 15 into engagement with the pin 41 of solenoid 12, and another spring 27A within solenoid 12 biases pin 41 upwardly into engagement with pawl member 15. Spring 27A is stiffer than spring 27, such that pawl member 15 is biased into engagement with shift gate 10. Spring 27 ensures that pawl 15 disengages gate 10 when solenoid 12 is activated to retract pin 41, and also ensures that disk shaped head 18 of pin 15 remains in contact with pin 41 when it is retracted.

A sensor or switch 28 generates a signal if the pawl 15 is in the PARK position. Also, sensors generate signals to the controller 20 when the brake pedal 29 is depressed, and also if a key is in the ignition cylinder 30 and in the run position.

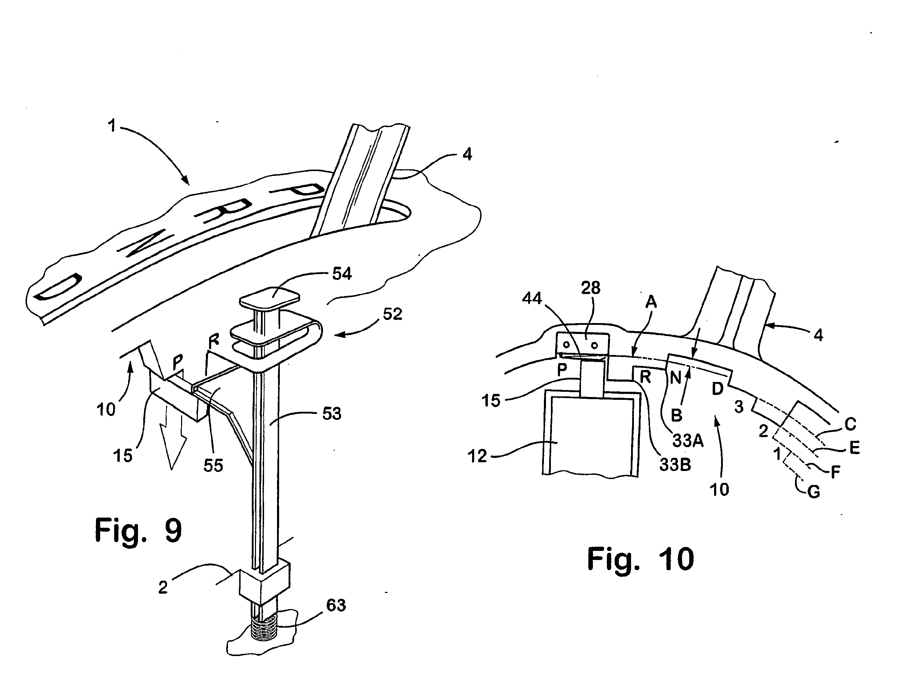

The controller (or electrical circuit) and electrically powered pawl arrangement not only selectively control movement of the shift lever, but also provides a park lock and Brake Transmission Shifter Interlock ("BTSI") function without requiring additional devices/mechanisms and the additional costs associated with separate park lock and BTSI. devices/mechanisms. The PARK position 31 of shift gate 10 is configured such that the pawl 15 prevents movement of the shift lever 4 out of PARK position 31 unless solenoid 12 is actuated to shift pawl 15 to the disengaged position. Controller 20 prevents actuation of pawl 15 when the shift lever 4 is in the PARK position unless brake pedal 29 is depressed and a key is in the ignition in the run position. As described in more detail below, the powered pawl permits the shifter 1 to be locked in the PARK position utilizing either an electrical or a mechanical lock mechanism. Controller 20 also locks ignition cylinder 30 to prevent removal of the ignition key unless the shifter is in the PARK position. The mechanical release or override mechanism 25 described in more detail below in connection with Fig. 9 permits manual release of the pawl in all gear positions even if the vehicle is without power. This unique arrangement eliminates a drawback in prior mechanically actuated pawls. Such mechanical pawls can often be "fooled" (i.e. circumvented) by holding down the pawl release button while removing the key from the ignition, thereby permitting movement of the shift lever out of PARK. An auxiliary power source such as a battery 26 may also be utilized to provide for actuation of solenoid 12 in the event the vehicle's main battery is dead.

Controller 20 may also provide a neutral lock if required for a particular application. For example, the neutral position on gate 10 could have a "locked" configuration similar to the PARK gate requiring actuation of the pawl to allow movement of shift lever 4 out of NEUTRAL and controller 20 could engage pawl 15 if the shift lever 4 is in the NEUTRAL position and the vehicle has not moved for a predetermined period of time such as 5 seconds. Controller 20 would then only retract the pawl 15 if the brake pedal 29 is depressed and a key is in the ignition cylinder 30 in the run position.

REVERSE position 32 may include a "bottom" surface 33 (Fig. 3), and a side wall 34. Thus, when the shift lever is in the REVERSE position and pawl 15 is in engagement with the REVERSE gear position 32, the pawl 15 prevents movement of the shift lever to the PARK position unless solenoid 12 is actuated, but allows movement to the NEUTRAL position 35 and DRIVE position 36 without depressing button 16 to actuate solenoid 12. However, the solenoid 12 must be actuated to shift from the DRIVE position 36 to the "3" (i.e. lower drive) position 37 due to side wall 38 of the DRIVE position 36. Similarly, the side wall 39 of NEUTRAL position 35 prevents movement of the shift lever from the NEUTRAL position 35 to the REVERSE position 32 unless the solenoid 12 is actuated by pushing button 16. If the shifter is electronic (i.e. utilizes sensors 40 to determine the gear position) the NEUTRAL and PARK positions may be combined by programming controller 20 to prevent a shift from REVERSE to DRIVE unless certain vehicle operating criteria are met. For example, controller 20 could be programmed to permit shifting from REVERSE to DRIVE and vice versa only if the vehicle is traveling at less than a preselected speed such as 5 mph in the reverse and forward directions, respectively. In this configuration, PARK and NEUTRAL share the same gear position.

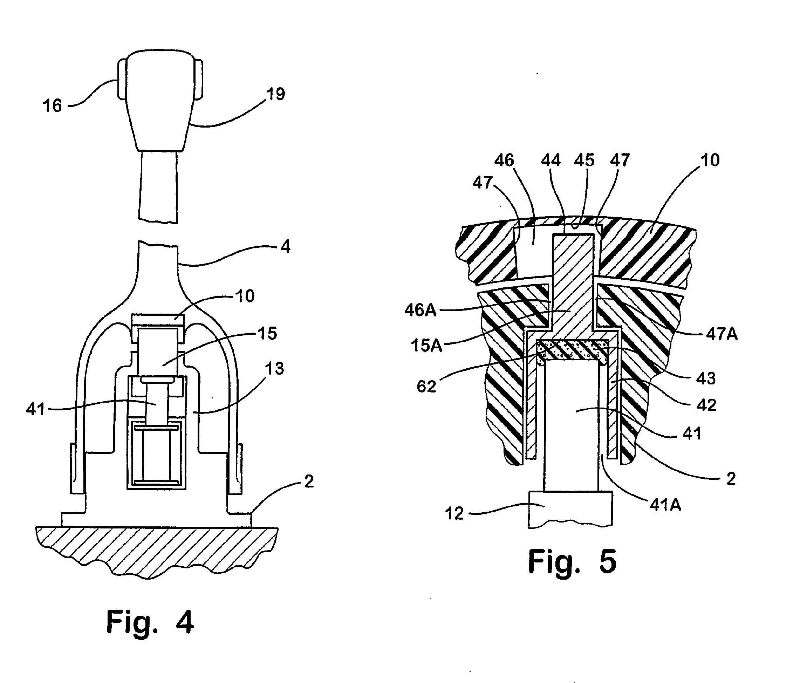

With further reference to Figs. 4 and 5 a resilient damper pad 43 may be positioned within a cylindrical retainer 42 formed integrally with pin 15A, such that pin 41 of solenoid 12 contacts damper 43 to reduce noise that would otherwise be caused by the solenoid contacting the bottom surface 62 of the pawl pin 15A. Also, in the embodiment illustrated in Fig. 5, the end 44 of pawl 15A does not contact the surface 45 of the detent gate 46, such that noise is not generated by contact between the pawl 15A and detent gate 46. Similarly, in the arrangement illustrated in Fig. 3, the pawl 15A may be configured such that the pawl 15A does not contact the bottom surfaces of the NEUTRAL gate 35 or DRIVE gate 36 to thereby eliminate noise that would otherwise be caused by, for example, shifting from the REVERSE position 32 to the NEUTRAL position 35 and/or DRIVE position 36.

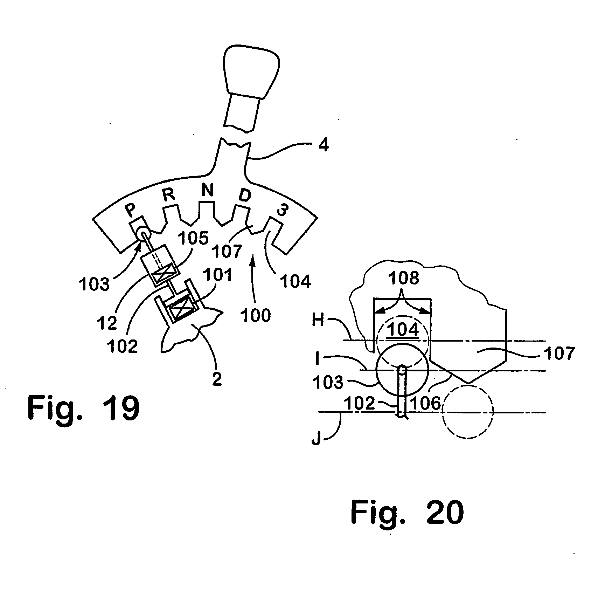

Also, the arrangement of Fig. 5 reacts loads applied to gate 10 via lever 4 into base 2, rather than into the solenoid 12. If a load tending to move gate 10 is applied, pawl 15A will contact sidewalls 47A of the opening 46A through which pawl 15A extends. The outer diameter of pin 41 is less than the inner diameter of retainer 42, thereby forming a gap 41 A that permits some movement of pin 15A and retainer 42 relative to pin 41. Resilient pad 43 may extend into gap 41A to position pawl 15A relative to pin 41 and yet permit some relevant movement without transferring significant force from pawl 15A to solenoid 12. Thus, solenoid 12 does not need to react the entire load applied to gate 10 via lever 4. It will be readily apparent that various resilient coupling arrangements could be utilized for this purpose. In addition to the shift gate 10, the shifter 1 may also include a detent for retaining the shift lever 4 in a desired gear position and to provide tactile feedback to the operator. For example, as illustrated in Fig. 1, a detent member 49 may be mounted on a spring member 50 or the like, such that the detent 49 is biased into engagement with notches/detents 48 formed on the shift handle 4. Alternately, a conventional "rooster comb" detent arrangement may also be utilized. An example of such a detent is illustrated in U.S. Patent No. 5,775,166.
Thus the detent positions shift lever 4 to retain the lever in gear positions such as NEUTRAL and DRIVE (Fig. 3) that do not require actuation of the pawl, and also provides "feel" (tactile feedback) to the operator, and the pawl 15 locks the lever 4 in the selected position. As discussed below in connection with Figs. 19 and 20, the shift gate and pawl may be configured to provide a detent, such that a rooster comb is not required.

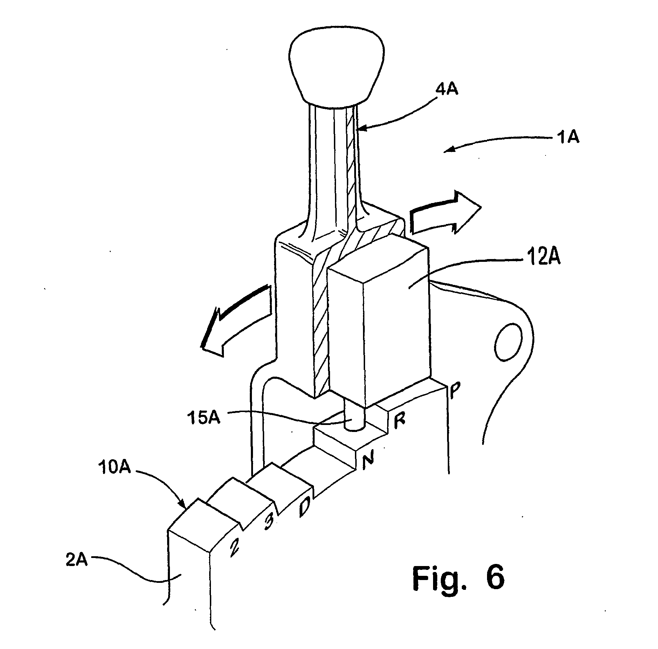

With reference to Fig. 6, solenoid 12A may be mounted in shift lever structure 4A, with the shift gate 10A being mounted to the shifter base 2A. The shift arm, solenoid 12A and shift gate 10A operate in substantially the same manner as described in detail above, except that the gate 10A is fixed to the base 2A, and the solenoid 12A is fixed to the shift lever 4A and moves therewith.

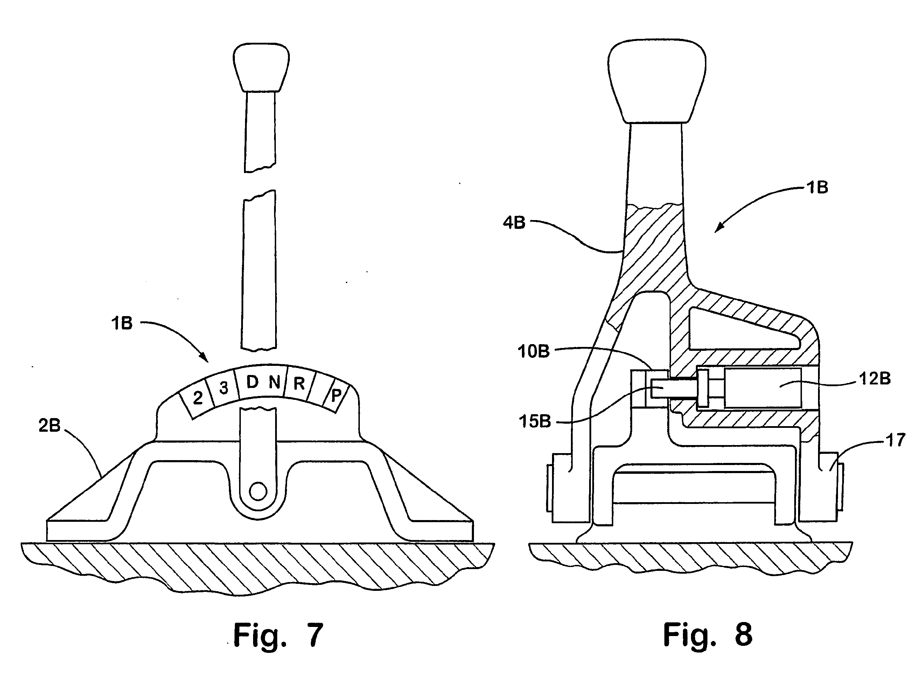

With further reference to Figs. 7 and 8, a solenoid 12B may be mounted in the handle 4B of a shifter 1B. A pawl member 15B shifts horizontally, generally parallel to the axis of rotation 17. The pawl 15B engages shift gate 10B, and operates in substantially the same manner as described in detail above.

With further reference to Fig. 9, the shifter 1 may include an override release mechanism 52 for manually disengaging the pawl 15 when, for example, the vehicle's battery is dead such that solenoid 12 cannot be electrically operated. The override release 52 includes an elongated movable member 53 that is slidably mounted to the base 2. The member 53 includes a button 54 at an upper end thereof that can be manually pushed downwardly by an operator such that the arm 55 contacts the pawl 15 and shifts the pawl 15 out of the engagement with the shift gate 10. Because the pawl mechanism 14, pawl 15 and movable member 53 are mounted to the base 2, the arm 55 remains in alignment with the pawl 15 as the shift gate 10 is moved with the shift lever 4 to each of the gear positions. Thus, the spring biasing the solenoid 12 into the engaged position also biases the member 53 upwardly due to the contact between the pawl 15 and arm 55. Alternately, a coil spring 63 or the like could be utilized to bias member 53 upwardly. Also, because the arm 55 stays in alignment with pawl 15, the override release 52 can be utilized to shift the pawl 15 into the disengaged position at any position (e.g. PARK, REVERSE, NEUTRAL, DRIVE, etc.) of the shift lever 4. Also, as discussed above, controller 20 may be configured to provide a park lock by preventing actuation of pawl 15 when in PARK unless brake pedal 29 is depressed. To prevent manual actuation of pawl 15 to bypass the park lock, a cover or other mechanical lock (not shown) requiring use of a key to release override mechanism 52 may be utilized. Also, the vehicle may include a backup power supply such as an auxiliary batter (not shown) that may be utilized to actuate solenoid 12 in the even the main battery goes dead. The backup power supply thereby permits release of the pawl 15 even if the main vehicle battery does not have sufficient charge to operate solenoid 12.

With further reference to Fig. 10, the solenoid 12 can be arranged such that the end 44 of pawl 15 does not engage the lower surfaces of the NEUTRAL position 35 and DRIVE position 36 to thereby reduce the noise that would otherwise result from the pawl 15 hitting the shift gate 10. In an illustrated example, the end 44 of pawl 15 has a maximum travel illustrated by the line "A". A gap "B" is formed between the end 44 of pawl 15 and the surfaces of the NEUTRAL gate 35 and DRIVE gate 36. Thus, if the shift lever 4 is moved from the REVERSE position 32 to the NEUTRAL position 35, the pawl 15 does not hit the shift gate 10.

The button 16 for actuating the solenoid 12 is preferably an electrical switch. Because the switch is electrical, the shape and size of the shift lever 4 and knob 19 are not constrained as with prior mechanical releases. Also, the controller may be programmed to provide various functions based upon the input from the button 16. For example, the controller 20 could be programmed to only require a single push ("click") of the button 16 for shifting from PARK to REVERSE, but could require that the button 16 be pushed a second time within a small time interval to actuate pawl 14 and shift from REVERSE to PARK to thereby prevent inadvertent shifting into PARK. Also, the distance the button 16 travels may also be utilized for proportional control of the solenoid 12. For example, as illustrated in Fig. 10, pawl 15 may need to be retracted a first position shown by the line "C" to permit movement of lever 4 from "N" to "R" or from "D" to "3". Pawl 15 may need to move a position at line "E" to permit movement of lever 4 from "R" to "P" or vice versa. Controller 20 may be programmed to move pawl 15 to position C when button 16 is depressed a first distance, and to move pawl 15 to position E when button 16 is depressed a second, typically greater, distance. The shift gate 10 may be configured to include a range of additional gear positions such as 2 and 1 (L) that require additional retraction of pawl 15 to positions F and G. Controller 20 may be programmed to retract pawl 15 to these positions based upon further depression of button 16. Button 16 may include detents and/or audible signals at each position to enable the operator to determine how far in button 16 has been pushed. Controller 20 is programmed to control the distance pawl 15 travels based, at least in part, upon the number of times button 16 is depressed. For example, pawl 15 could retract to position "C" if button 16 is depressed once, to position E if depressed twice, to position F if depressed three times, and to position G if depressed four times. Still further, the velocity and acceleration of the button 16 could be utilized to control actuation of the pawl.

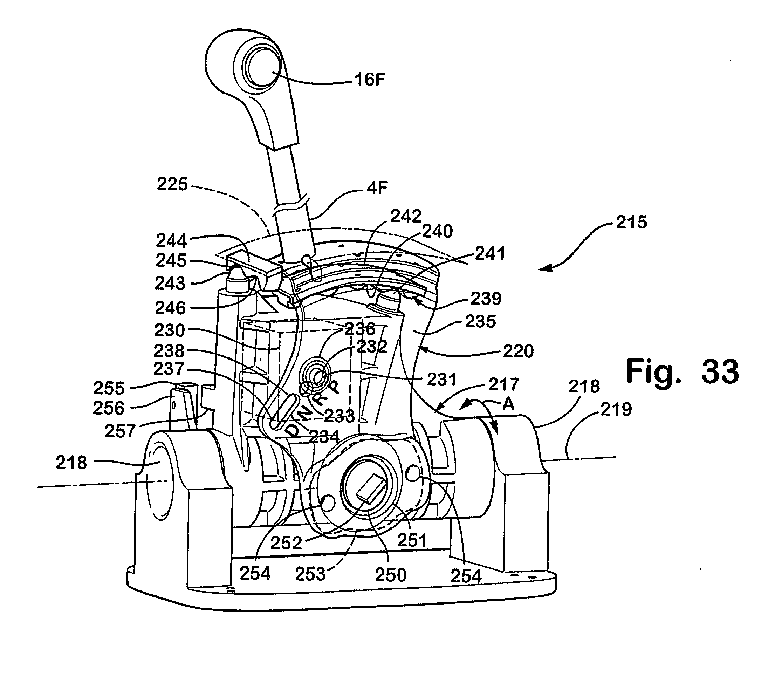

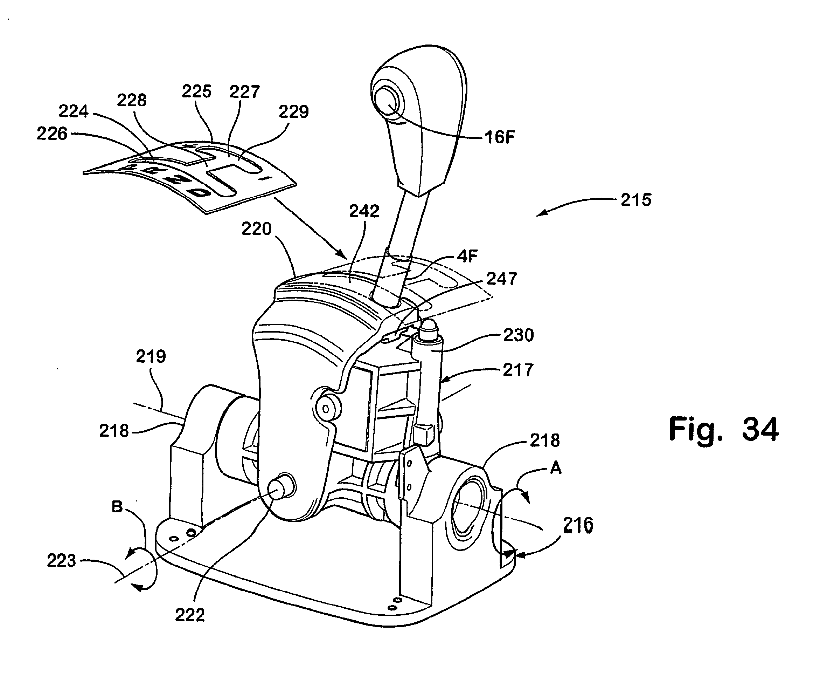

Outside the scope of the invention, the shifter may not include a button 16 for operator input to control solenoid 12 and pawl 15. If no button 16 is utilized, control of solenoid 12 is determined solely by the controller 20 based upon vehicle operating parameters. For example, when an operator first enters the vehicle, controller 20 may actuate solenoid 12 to disengage pawl 15 when the brake pedal 29 is depressed, and a key is in the ignition in the run position. The operator would then move the shift lever to the desired gear position, and controller 20 would shift the transmission to the desired gear position. Controller 20 may be programmed to prevent movement to certain gear positions based upon vehicle operating parameters. For example, with reference to Fig. 10, controller 20 may be programmed to prevent retraction of pawl 15 if the pawl is in the DRIVE position, and the operator attempts to move the shift lever 4 into the reverse position while the vehicle is moving forward at a predetermined speed, such as 10 mph. Also, shift lever 4 may be coupled to an analog rotary position sensor as described in more detail below in connection with the shifter illustrated in Figs. 33 and 34, such that controller 20 can determine the position of shift lever 4, as well as the direction of movement of the shift lever 4, even if the shift lever is between gear positions. Thus, controller 20 could actuate solenoid 12 if the vehicle is moving forward at, for example, 10 mph, and the operator attempts to move the shift lever 4 to the "3" gear position, but controller 20 would not actuate solenoid 12 to permit movement to the REVERSE position based upon the direction of movement of shift lever 4 and vehicle operating parameters (e.g., vehicle speed).

Also, the shift gate 10 may include various gear position notches of various heights, such that solenoid 12 could be actuated a selected distance to permit certain shifts based upon vehicle operating parameters and/or direction and/or position of movement of shift lever 4, but to prevent other gear changes. The shift gate 10 may include a lip 33A (Fig. 10) on the REVERSE notch and controller 20 may retract the pawl 15 greater distances as the vehicle speed decreases to permit downshifting to successively lower gear positions having notches requiring greater retraction of pawl 15. Lip 33A may have a height requiring a very low speed (e.g. 5 mph) to permit shifting into or out of REVERSE. The height of lip 33A could be the same as the height of the notch of the lowest forward gear position. The raised portion 33B between the PARK and REVERSE gear positions may have a height requiring full retraction of pawl 15 that would only occur if the controller determined that the vehicle was not moving. Controller 20 could also utilize other vehicle operating parameters such as engine rpm or the like to control the degree of retraction of pawl 15. Also, controller 20 may be configured such that shifting out of PARK requires that the pedal be depressed and that a key be in the ignition in the run position.

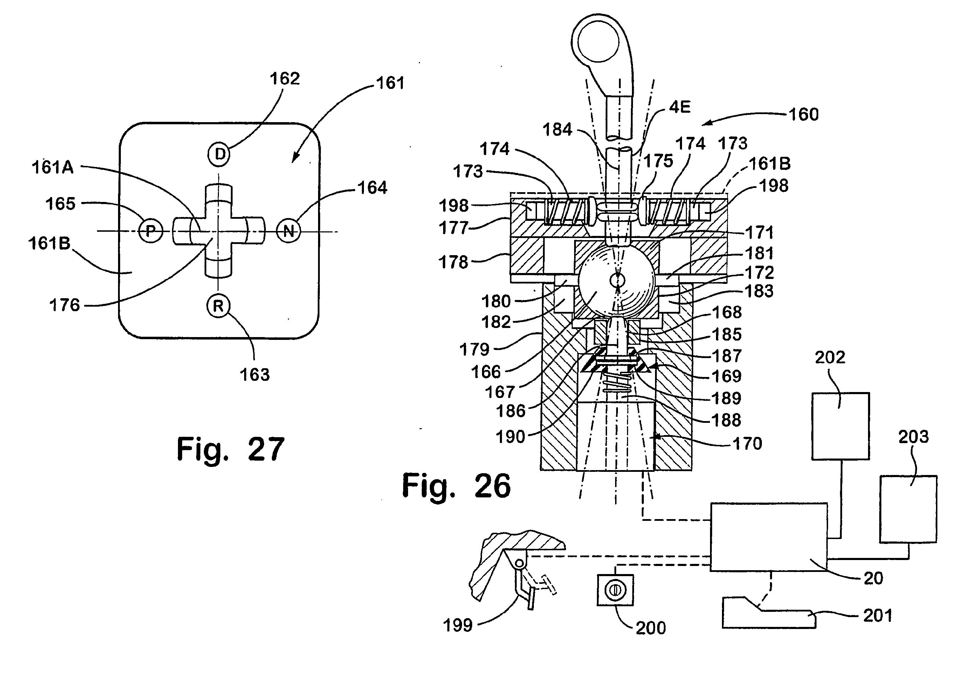

Also, controller 20 could be configured to actuate the solenoid 12 to disengage pawl 15 when the operator initially depresses the brake pedal and shifts the ignition to the run position, and solenoid 12 would then remain retracted to permit movement of the shift lever until the operator again moved the shift lever into the PARK position. Controller 20 would only actuate the solenoid 12 when in the PARK position if certain vehicle operating parameters were met. For example, controller 20 could be configured to actuate solenoid 12 to engage pawl 15 in the PARK position if the vehicle is traveling below a preselected velocity and/or if the brake pedal is depressed. However, during operation, the pawl 15 would remain retracted when the shift lever was in the other gear positions such as the REVERSE, NEUTRAL, DRIVE, 3, or other gear positions. Although the operator could move the shift lever from, for example, DRIVE to REVERSE while the vehicle was moving in a forward direction at or above a preselected velocity such as 10 mph, controller 20 would not change the gear position of the transmission to REVERSE unless the vehicle were traveling below the preselected velocity (e.g. 10 mph) and/or other vehicle operating parameters were within allowed ranges for the desired shift. If the operator moves the shift lever 4 to a gear position indicating the desire to shift to a gear position that the controller determines is not a permitted shift, shift lever 4 will not be synchronized with the transmission, and an indicator such as the indicator 202 discussed in connection with the shifter of Fig. 26 in more detail below would flash to signal to the driver that the desired shift did not occur.

Furthermore, the design of the button 16 may be varied to provide tactile feedback to a user. For example, the button 16 may be configured to provide a "click" and/or detent providing tactile feel for the user to indicate that the button has been depressed the required distance. Alternately, if the button 16 is configured to provide proportional control based upon the distance the button 16 is depressed, the button 16 may be configured to provide a series of detents, each corresponding to the distance the button 16 has been depressed. Furthermore, in addition to varying the force required to push the button to provide tactile feedback, the button 16 may also be configured to provide a sound corresponding to the distance the button 16 has been depressed to provide feedback to the user.

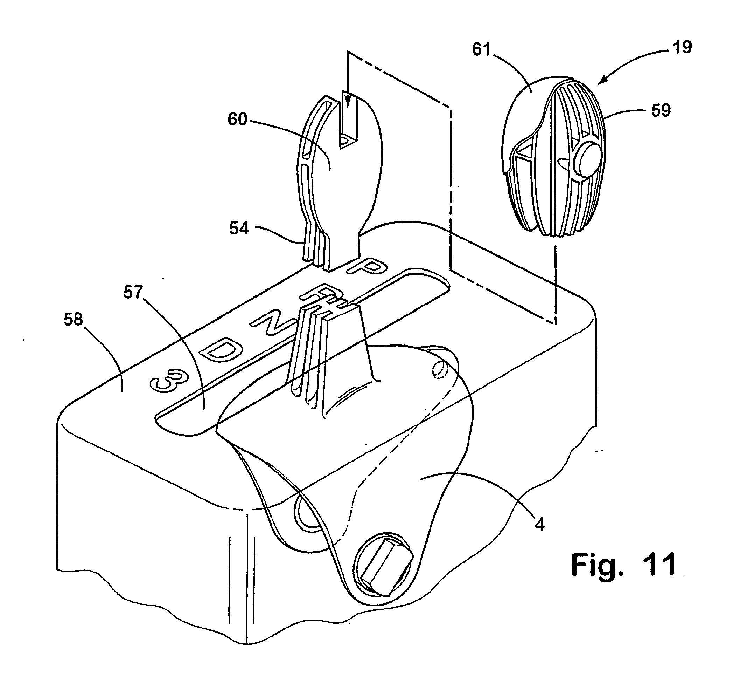

With further reference to Fig. 11, the shifter 4 can be manufactured in a cost efficient manner. More specifically, the elongated portion 54 of the handle can be inserted through an opening 57 in a bezel 58. A plastic core 59 of knob 19 can then be snapped, adhesively bonded, or otherwise attached the end portion 60 of lever 4. A leather cover 61 or the like can then be installed. This arrangement permits a variety of shift knobs having different shapes and/or appearances to be readily attached to shift lever 4. The shifter can therefore be readily "customized" to match the interior styling of a particular vehicle without requiring an entirely new shift lever and related components. Furthermore, the electrical shift button 16 eliminates the need for a mechanical release and related linkage in the knob and shift lever, such that the design and/or appearance of the knob can be changed without extensive effort that would otherwise be required to provide new linkage and related components. Also, the shift knob and lever could be formed as an integral, one-piece unit, providing substantial cost savings. The integral, one-piece knob may be utilized in applications wherein a shift boot is included in the assembly. Also, because the shift lever and knob do not need to accommodate internal mechanical linkage for operation of the pawl, the lever can be injection molded (rather than a steel tube), and may include an integral knob.

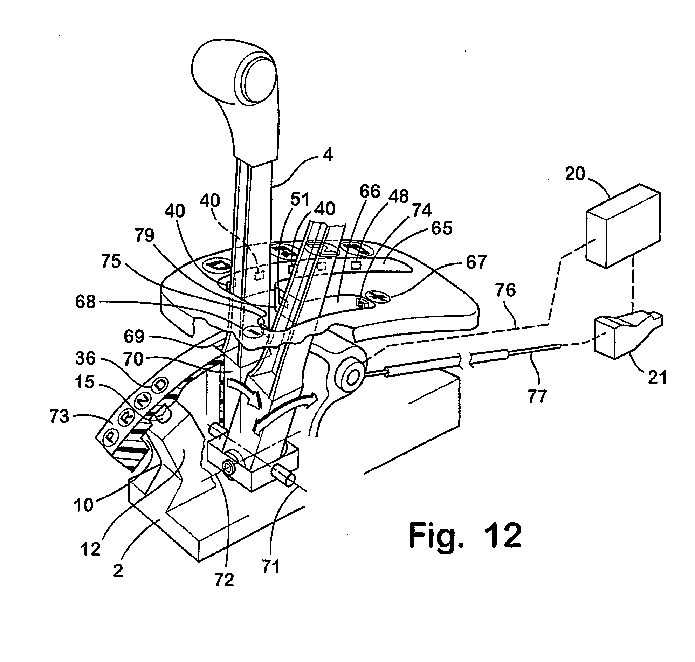

With further reference to Fig. 12, another embodiment of the shifter according to the present invention includes an "automatic" shift lane 65 with PARK, REVERSE, NEUTRAL and DRIVE gear positions. The shifter also includes a manual shift lane 66 having an upshift or "+" position 67 and a downshift, or "-" position 68. The solenoid 12 and pawl 15 engage the shift gate 10 in substantially the same manner as described above when the shift lever 4 is in the automatic shift lane 65. Shift gate 10 includes a shift lever receiving portion 69 that receives the base portion 70 of the shift lever 4 when the shift lever 4 is in the automatic shift lane 65. Thus, pivoting of the shift lever 4 about a first axis 71 along the shift lane 65 causes the shift gate 10 to move with respect to the pawl 15 to permit control of the transmission in substantially the same manner as described in detail above in connection with the shifter of Fig. 2. However, the shift lever 4 can also pivot about a second axis 72 for movement into the manual shift lane 66. When the shift lever 4 is shifted to the manual shift lane 66, the base portion 70 of shift lever 4 is moved out of engagement with the receiving portion 69 of shift gate member 73. When shift lever 4 is moved to manual shift lane 66, the pawl 15 engages the DRIVE notch position 36 of gate 10, and thereby retains the shift gate member 73 in position. Notch 36 may be large enough to include both the DRIVE and NEUTRAL gear positions. In this case, when shift lever 4 is moved to the manual shift lane. Thus, pawl 15 remains engaged with gate 10 and thereby retains gate 10 such that no separate locking member or the like is required to retain the components when the shift lever is moved between the manual and automatic shift lanes. Also, cable 77 remains connected to shift gate 10 such that no disconnect/reconnect device is required for cable 77. When the shift lever 4 is in the manual lane 66, it can be pivoted about the axis 71 into the "+" or "-" positions. The lever 4 contacts a sensor 74 when in the upshift position 67, and contacts a sensor 75 when in the downshift position 68. The sensors 74 and 75 are operably connected to the controller 20 by lines 76, and the controller 20 generates a signal to the transmission 21 causing the transmission 21 to upshift or downshift by one gear. In a preferred embodiment, the lever 4 controls a cable 77 when in the automatic shift lane 65 to control the transmission 21. However, sensors 40 may also be utilized in the automatic shift lane 65, and electrical lines 76 are then utilized to provide inputs to the vehicle controller 20. Thus, when lever 4 is in the shift lane 65, mechanical cable 77 may be utilized by itself or in combination with sensors 40 and controller 20 to control transmission 21. Alternately, the cable 77 may be eliminated, and sensors 40 and controller 20 may be utilized to control transmission 21. The shifter may also include a sensor 51 in the transverse lane 79 connecting automatic shift lane 65 to manual shift lane 66 to provide a signal to controller 20 indicating that shift lever 4 has been moved from lane 65 to lane 66, or vice versa.
Alternately, analog rotary position sensors could be utilized to determine the position of lever 4 about axis 71 and/or axis 72. Also, a conventional rooster comb or other suitable detent arrangement can be utilized to retain shift gate member 73 and/or shift lever 4 and provide tactile feedback to an operator when rotated about axis 71 and/or axis 72. A single rotary position sensor can be utilized to determine the position of the shift lever in both the automatic and manual shift lanes.

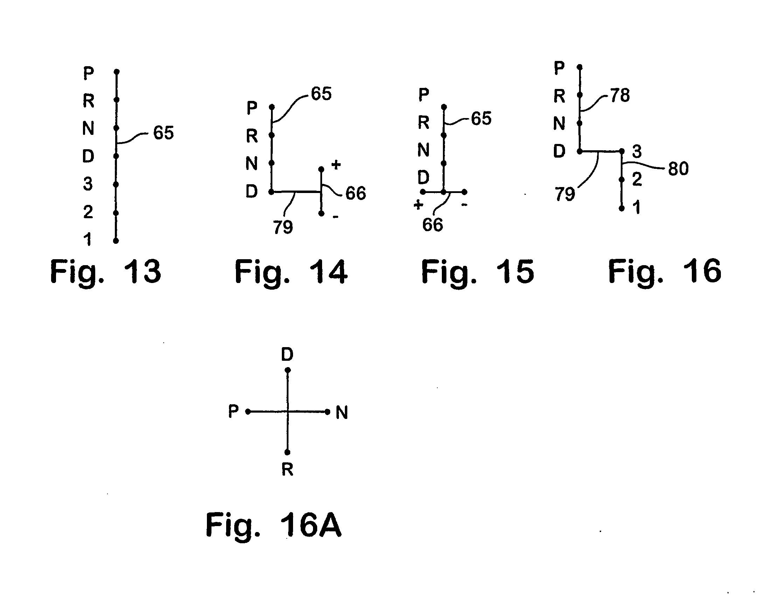

With reference to Figs. 13-16A, a variety of shift patterns can be utilized with the shifter of the present invention. For example, Fig. 13 illustrates a "conventional" automatic shift lane 65, and Fig. 14 illustrates schematically the shift pattern of the shifter of Fig. 12. The manual shift lane 66 may also be oriented as shown in Fig. 15, and a "serpentine" shift pattern having a first portion 78, second portion 79, and third portion 80 as illustrated in Fig. 16 may also be utilized. A "+" shift pattern as illustrated in Fig. 16A may also be utilized.

The shifter of the present invention can be utilized with either an electrical PARK lock, or a mechanical PARK lock. With reference to Fig. 3, an electrical PARK lock utilizes inputs from the ignition switch cylinder 30, brake pedal 29, or PARK indicator sensor/switch 28. The controller 20 is programmed to prevent actuation of (i.e. "lock") pawl mechanism 14 if no ignition key is present in ignition switch cylinder 30, or if the key is not in the "RUN" position. If the key is in ignition switch cylinder 30 and it is rotated to the "RUN" position, the pawl mechanism 14 is "unlocked". When the pawl 14 is unlocked, controller 20 will actuate pawl 14 if the vehicle operator pushes button 16 and the shift lever 4 is in the PARK position and the brake pedal 29 is depressed. Also, if pawl 14 is unlocked (i.e. a key is in the ignition, and the ignition is in the RUN position), controller 20 will actuate pawl 14 if button 16 is pressed and shift lever 4 is in the REVERSE, NEUTRAL, DRIVE or other forward gear positions, regardless of whether or not brake pedal 29 is depressed. Also, controller 20 is programmed to prevent removal of the key from ignition cylinder 30 if shift lever 4 is in the REVERSE, NEUTRAL, DRIVE, etc. positions (i.e. any position except PARK). It is anticipated that controller 20 could control pawl 14 based on other vehicle operating parameters. For example, pawl 14 could be "locked" when shift lever 4 is in the REVERSE position and the vehicle is moving backward at a pre-selected velocity to prevent accidental shifting into PARK while the vehicle is moving. The configuration of the REVERSE gate 32 (Fig. 3) would still permit movement of lever 4 to the NEUTRAL and DRIVE positions.

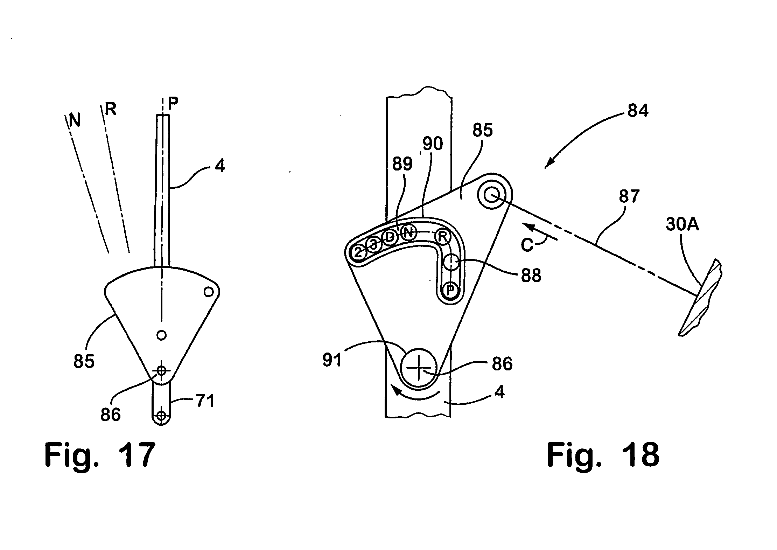

With reference to Figs. 17 and 18, a mechanical park lock 84 includes a park lock cam 85 that retains the shift lever 4 in the PARK position unless the brake pedal 29 is depressed, and a key is in the lock cylinder 30 as illustrated in Fig. 3. The park lock cam 85 is mounted to the base 2 by a pivot 86 that is above shift lever pivot axis 71. Cam 85 is connected to a mechanical key lock cylinder 30A via a conventional park lock cable 87. A park lock cam drive pin 88 on shift lever 4 engages a slot or track 89 in cam 85 formed by walls 90 on cam 85. A torsion spring 91 biases cam 85 in a clockwise direction, and a conventional spring (not shown) in cable 87 acts between "ground" and the outer sheath (not shown) of cable 87 to tension cable 87. The geometry of slot 89 is chosen such that cam 85 will rotate in a counter-clockwise direction about pivot 86 as shift lever 4 is moved from the PARK to REVERSE position due to pin 88 traveling in slot 89. Counter-clockwise rotation of cam 85 causes cable 87 to shift ("lengthen") by a predetermined amount (e.g. 10 mm) in the direction of arrow "C". Shifting of cable 87 locks key cylinder 30A such that the ignition key cannot be removed from cylinder 30A when the shift lever 4 is not in PARK. The geometry of slot 89 ensures that the cable 87 remains lengthened, thereby locking cylinder 30A and preventing removal of the ignition key when shift lever 4 is in all positions (e.g. REVERSE, NEUTRAL, DRIVE, etc.) except PARK.

Lock cylinder 30A includes a sensor that generates a signal to controller 20 indicating if a key is present and if the ignition is in the "OFF" or "RUN" position in substantially the same manner as cylinder 30 described above. When mechanical PARK lock 84 is utilized, controller 20 is programmed to prevent actuation of pawl mechanism 14 and shifting out of PARK unless brake pedal 29 is depressed and the ignition key is in the RUN position and the button 16 is pushed in substantially the same manner as described in detail above in connection with the electrical PARK lock (Fig. 3).

Controller 20 may be operably connected to the main controller in the vehicle, such that the solenoid 12 could be controlled based upon other vehicle inputs. For example, a sensor could determine if the seatbelt is being used, and prevent movement of the shift lever 4 out of the PARK position unless the seatbelt is in use. Furthermore, the controller 20 could be programmed to control the solenoid 12 based upon other vehicle inputs such as engine r.p.m., vehicle speed or acceleration in a linear direction as well as lateral acceleration or the like. Thus, the controller 20 could be programmed to prevent downshifting if a pre-selected engine r.p.m. is present, or could otherwise be programmed to control shifting based upon vehicle speed or the like.

As described above in connection with Fig. 3, the gates may be formed to permit movement from REVERSE to NEUTRAL and DRIVE without pressing button 16. Alternately, each shift position (e.g. REVERSE, NEUTRAL, DRIVE, etc.) could have a "locking" gate configuration such as the one illustrated in Figs. 5,19 or 22 with sidewalls that prevent movement of the pawl out of the gear position in either direction unless the pawl mechanism 14 is actuated. In this configuration, button 16 must be pushed to move the shift lever 4 out of all gear positions, and the transmission is electronically controlled (i.e. a cable 22 is not utilized). Also, the controller 20 is programmed to ensure that the shifter 1 remains synchronized with the transmission. For example, if a vehicle is traveling at 10 mph in the reverse direction, the vehicle electronics (e.g. controller 20) may prevent the transmission from shifting to drive if the shifter were moved to the DRIVE position. In this situation, the shifter and the transmission would be out of synchronization with the shifter being in DRIVE and the transmission being in reverse. To prevent this condition, the shifter is not allowed to shift from any gear position unless authorized by the controller 20, even if button 16 is actuated. Thus, the vehicle operator could not physically move the shifter out of REVERSE if the car is moving at a pre-selected speed such as, for example, 10 mph. Therefore, each gear position would be a locking position with no freedom to move to any gear unless the controller 20 determines a shift is permitted based upon selected vehicle operating parameters, and actuates the solenoid or actuator. In this way, controller 20 maintains synchronization.

Also, controller 20 may also be configured to maintain synchronization by controlling the distance pawl 15 travels, with the travel distance of the pawl being determined by controller 20 rather than the vehicle operator. By providing a properly configured shift gate (e.g. Fig. 10), controller 20 can ensure synchronization by retracting pawl 15 a small distance allowing a shift from DRIVE to D2, but not enough to shift from DRIVE to REVERSE.

Also, controller 20 may be configured to determine the position, direction, velocity and/or acceleration of shift lever 4 in substantially the same way as illustrated in U.S. Patent Nos. 6,209,408 and 6,405,611.
Controller 20 may be configured to permit actuation of pawl 15 at least partly based upon the position, direction, velocity, and/or acceleration of shift lever 4. For example, if the vehicle is moving at 30 mph in the forward direction, controller 20 could permit movement of shift lever 4 from DRIVE to D2, but not from DRIVE to REVERSE. After button 16 is pushed to actuate pawl 15, controller 20 quickly re-engages pawl 15 to prevent further movement of lever 4 if controller 20 determines that shift lever 4 is starting to move from DRIVE to REVERSE and the vehicle is traveling forward at a predetermined speed, but would not re-engage pawl 15 if shift lever 4 is starting to move from DRIVE to D2. Alternately, controller 20 could determine the position and velocity of shift lever 4 before actuation of solenoid 12 and pawl 15 to permit movement of shift lever 4. Thus, controller 20 would "override" the operator input to prevent movement of the shift lever based upon vehicle operating parameters.

Furthermore, controller 20 could provide limited actuation (i.e. limited travel) of pawl 15 in conjunction with a properly configured shift gate 10 and determination of the position and velocity of shift lever 4 to maintain synchronization of the shift lever 4 and transmission. For example, controller 20 could re-engage pawl 15 a small distance if lever 4 is moving from DRIVE to REVERSE to prevent movement to the REVERSE position if the vehicle is moving forward at a speed above a predetermined value, but leave the pawl fully disengaged if the vehicle is not moving forward above the predetermined speed such that the shift lever 4 can be moved from DRIVE to REVERSE.

In another embodiment, the shifter will only shift from one gear position to another position when the button 16 is depressed by utilizing a shift gate wherein each gear position is "locked". In this configuration, the lever 4 will only move when the controller 20 authorizes it to leave that position, and the next gear position is only engaged when the button is released. So, in a sense, the button acts like a clutch. As the lever is moved from the low DRIVE gear to PARK and the button is held in, the controller 20 is programmed such that the transmission is not engaged at each gear position between LOW and PARK as the lever passes each position. The transmission will only engage when the button 16 is released in the new gear position.

The powered pawl mechanism 14 preferably includes an electrically operated solenoid 12. However, other powered mechanisms such as an electric motor and gear drive such as pinion/rack or screw gear, hydraulic cylinders, pneumatic actuators or the like could also be utilized to provide powered actuation of the pawl. Furthermore, the pawl has so far been described as being biased into the engaged position, and powered for disengagement, other arrangements such as powered engagement and disengagement could be utilized. A bi-stable solenoid could also be utilized. Furthermore, the pawl could be biased out of engagement, and actuated to engage the shift gate. Also, rather than a shift lever, other manually operable shift members such a dial could also be utilized to control a transmission in substantially the same manner as described above for the shift lever. One example of a dial type shifter is disclosed in U.S. Patent No. 6,295,887, October 2, 2001.

With further reference to Figs. 19 and 20, in another embodiment the shift gate 100 and solenoid 12 are configured to provide the detent function without use of a separate "rooster comb". Solenoid 12 includes a connecting rod 102 operably connected with a spring 101. A roller 103 is mounted on the end of the rod 102, and is configured to engage the P, R, N, D, 3, gate positions 104. As illustrated in Fig. 20, when the solenoid 12 is not actuated the roller 103 will be biased into the position indicated by the line "H" by a spring 105 positioned within the solenoid 12. Upon actuation of the solenoid 12, the roller 103 shifts to the position indicated by the line "I". As the shift lever 4 is moved, the roller 103 will contact the angled end surface 106 of extension 107 and shift to the line indicated by the letter "J". As roller 103 travels along the angled surface 106, the external spring 101 is further compressed, thereby providing a detent function between each of the gear positions P, R, etc. However, when the roller 103 is in the fully extended position H within a gate position 104, the roller 103 restrains movement of the shift lever 4 due to contact with sidewalls 108 of extension 107. Thus, the shift gate 100 provides the detent function otherwise requiring a separate "rooster comb".

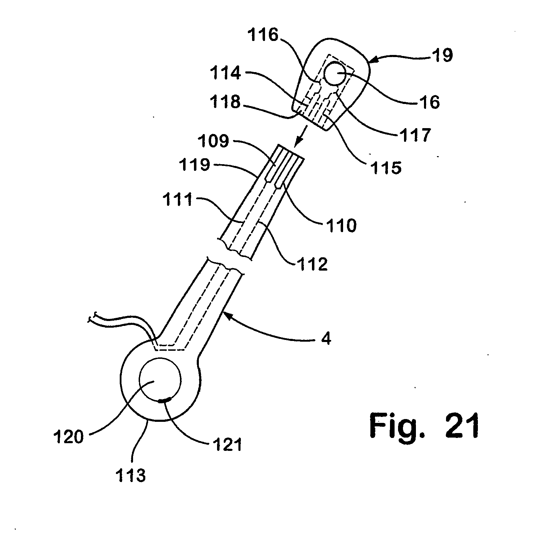

With further reference to Fig. 21, shift lever 4 may be made of a molded material such as a polymer material or the like, with metallic electrical conductors 109 and 110 are molded into the shift lever 4. The electrically conductive elements 109 and 110 are connected to wires 111 and 112 that are molded into the shift lever 4 and exit adjacent the base portion 113 of the lever 4. Electrically conductive elements 114 and 115 are molded into the shift knob 119, and electrically coupled to the button 16 via wires 116 and 117 or the like. Knob 19 includes a cavity 18 having a shape closely corresponding to the end portion 119 of shift lever 4. During assembly, the knob 19 slides onto the end portion 119 of lever 4, such that electrical contacts 114 and 115 in knob 19 are electrically connected to the electrically conductive elements 109 and 110, respectively in the shift lever 4. This arrangement permits a very cost-effective and rapid assembly, while also providing a secure electrical connection. The wires 111 and 112 are routed externally to the controller 20 or other electrical components in the vehicle as required. Alternately, optical emitter and detector pairs could be utilized instead of the electrical connectors 109, 110 and 114, 115. Also, the wires 111 and 112 could be electrically connected to a sliding electrical connector 121 to transmit the electrical signal from the shift lever 4 about the pivot joint 120.

In another aspect of the present invention, controller 20 could be coupled to a radio transmitter/receiver. The transmitter/receiver would transmit and/or receive signals from a key fob or the like carried by the user of the vehicle to provide for keyless vehicle security. The controller 20 may be programmed to prevent actuation of the pawl when the shift lever is in the PARK or other position unless the controller 20 received a signal indicating that the correct key fob for the vehicle were present. The key fob is a transponder that generates a unique signal/code, and the controller 20 would prevent actuation of the solenoid 12 unless the correct code for the particular vehicle were recognized. In this way, the electric pawl of the present application provides an additional level of security.

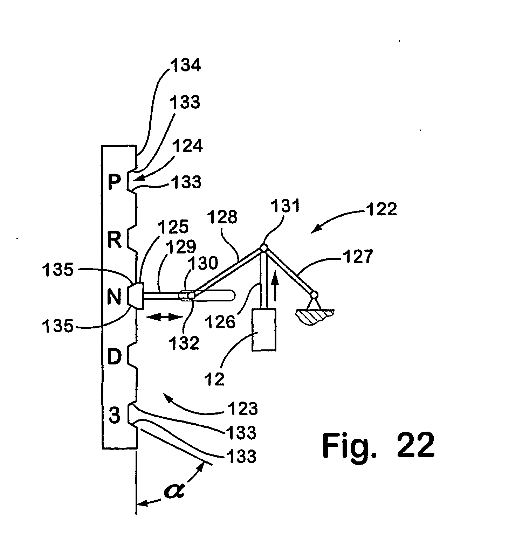

As described above, the pawl 15 may be connected directly to the solenoid 12, such that the pawl 15 moves with the solenoid 12. Alternately, a toggle mechanism 122 may be utilized to operably interconnect the solenoid 12 with a shift gate 123 as illustrated in Fig. 22. In the illustrated example, the P, R, N, D, and 3 gate positions are formed by notches 124 having a shape that corresponds to a pawl 125. The rod 126 of pawl 12 is connected to a pivot 131 that rotatably interconnects first and second links 127 and 128. A guide such as a pin or the like 132 on second link 128 is linearly guided in a slide 130, and a third link 129 is pivotably connected to the second link 128 at 132. The toggle mechanism 122 and solenoid 12 may be mounted to the shift lever, with the gate 123 remaining stationary. Alternately, the solenoid and toggle mechanism 122 may be mounted to the base of the shifter, and the shift gate 123 may be formed on the shift lever. A toggle mechanism such as the one illustrated in Fig. 22 is disclosed in U.S. Patent No. 5,775,166. The toggle mechanism 122 provides for a transfer of force through the linkage, rather than through the solenoid 12. Also, the toggle mechanism 122 can be configured to provide substantial mechanical advantage generating a relatively large force engaging the pawl 125 into the notches 124. When pawl 125 is fully engaged in a notch 124, links 127 and 128 are "locked" and form a straight line such that forces acting on pawl 125 in the direction of slide 130 are reacted axially through links 127 and 128. Also, toggle mechanism 122 generates a large force disengaging pawl 125 upon actuation of the solenoid 12 to thereby ensure disengagement even if an operator is applying a force to the shift lever at the time button 16 is pushed. For example, solenoid 12, pawl 125, shift gates 124 and toggle mechanism 122 may be configured to ensure disengagement of pawl 125 by solenoid 12 even if a force of 10, 25, or 50 newtons is applied to the shift lever 4 by an operator. The toggle mechanism 122 of Fig. 22 may be readily incorporated into a shifter such as the one illustrated in, for example, Figs. 7 and 8 of the present application.

The side faces 133 of notches 124 defme an angle α with the front face 134 of shift gate 123, and the faces 135 of pawl 125 are preferably parallel to the faces 133. The angle α affects the amount of force required to move the shift lever despite having pawl 125 engaged with notch 124. For example, if the angle α is very small, a given load on the shift lever will tend to cause the faces 135 to slide on the faces 133 due to the wedging interaction, thereby pushing the pawl 125 out of engagement with notch 124. Alternately, if α is 90 degrees or close to 90 degrees, a relatively small force on the shift lever will generate a relatively large frictional force between the faces 133 of notches 124 and the faces 135 of pawl 125, thereby requiring a relatively large force to disengage pawl 125. In addition to the angle α, the coefficient of friction between the faces 133 and 135 also have an impact on these forces. In general, the shifter is designed to permit release of pawl 125 even if a predetermined force of, for example, 222, 444, or 666 newtons (50, 100, or 150 pounds) is applied to the knob, and the solenoid 12 is actuated to disengage pawl 125. Conversely, the angle α and frictional characteristics are chosen to ensure that pawl 125 remains engaged with notch 124 if solenoid 12 is actuated to engage pawl 125 with notch 124 even if an external force of, for example, 50, 100, or 150 pounds is applied to the knob of the shift lever. Depending upon the frictional characteristics of the pawl 125 and notches 124, the angle is preferably in the range of about fifty degrees to about eighty-five degrees, and is more preferably in the range of about sixty degrees to about eighty degrees. Above-identified U. S. Patent No. 5,775,166 to Osborn et al. does disclose a solenoid and toggle linkage arrangement. However, the notches of the Osborn'166 shifter are not all of the same depth, such that the toggle linkage is not in the "locked" configuration in some gear positions, such that a force applied to the Osborn'166 shift lever will collapse the toggle linkage, permitting movement of the shift lever even though the force applied to the shift lever is quite small. It will be readily appreciated that the principles just described apply to designs that do not include a toggle mechanism 122, but rather have a pawl 125 directly connected to a solenoid 12 or other powered actuator to directly engage/disengage pawl 125 from notches 124. Thus, the angle α can be chosen based upon the frictional characteristics to provide a relatively high force requirement to force movement of the shift lever when pawl 125 is engaged with notch 124, but also to permit disengagement of pawl 125 from notch 124 by a relatively small solenoid 12 or other powered actuator even if a force is applied to the shift lever.

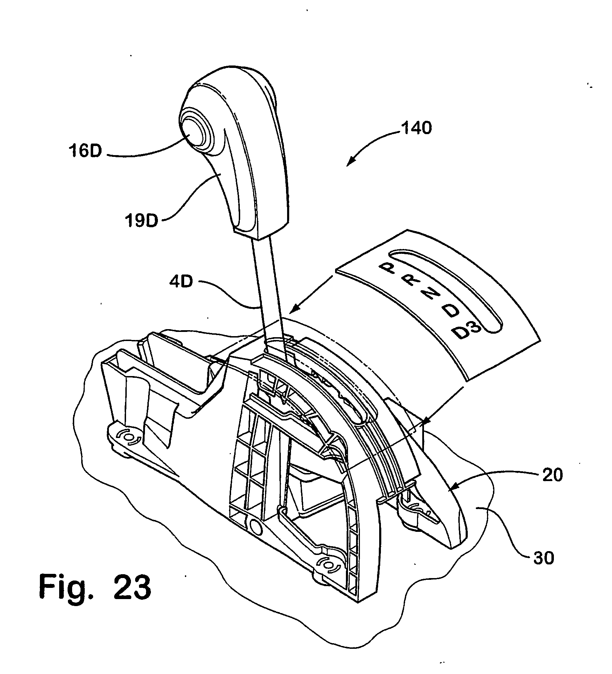

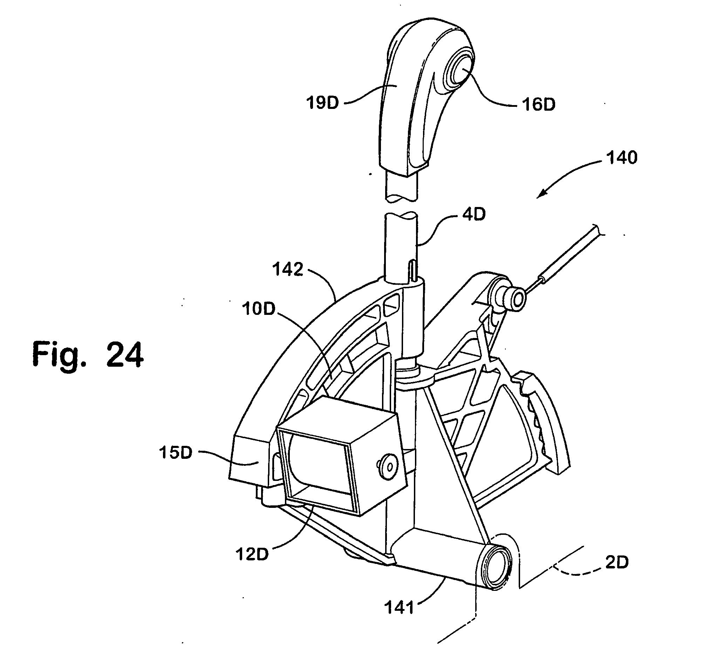

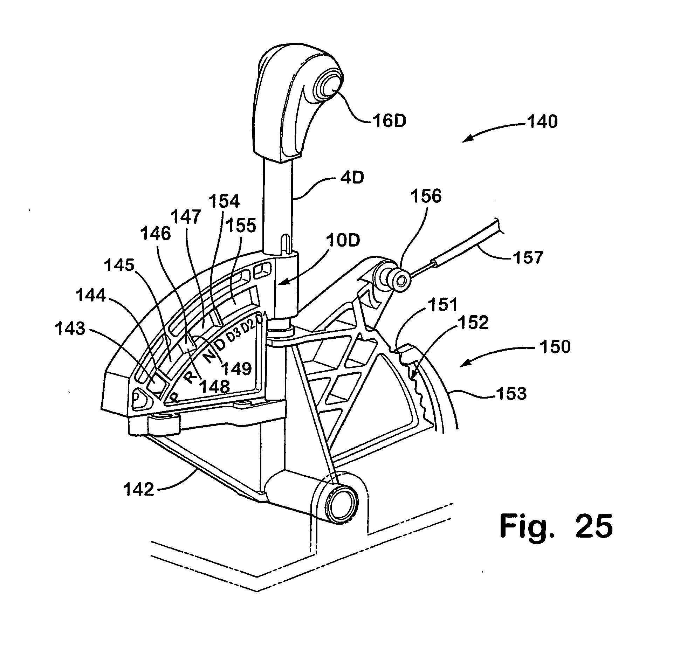

Yet another embodiment of a shifter according to the present application is illustrated in Fig. 23. Shifter 140 includes a shift lever 4D, knob or handle 19D and push button 16D. With further reference to Fig. 24, the shifter 4D is rotatably mounted to base 2D about a conventional pivot 141. Solenoid 12D is mounted to the base 2D, and actuates a pawl 15D to engage a shift gate 10D formed in base 142 of shift lever 4D. With further reference to Fig. 25, shift gate 10 includes a first cavity 143 corresponding to the PARK position. A wall 144 separates the PARK cavity 143 from the adjacent cavity 145. Cavity 145 corresponds to the REVERSE position, such that the shifter will shift the transmission into reverse when the pawl engages cavity 145. A wedge or ramp 146 separates the REVERSE cavity 145 from the adjacent cavity 147. The wedge 146 includes a first sloped wall 148 facing the cavity 145, and also includes a straight wall 149 adjacent the cavity 147. If the shift lever 4D is pushed forwardly when the pawl is in the cavity 145 without depressing button 16D, the pawl 15D will slide along the surface 148, thereby retracting the pawl 15D and enabling the operator to move the shift lever 4D until the pawl 15D engages the cavity 147 at the NEUTRAL position. However, if the lever 4D is pulled rearwardly without pressing button 16D, the straight wall 149 will prevent movement of the shift lever from the NEUTRAL position to the REVERSE position. Cavity 147 includes both the NEUTRAL and DRIVE positions, such that an operator of the vehicle can shift the lever 4D from the NEUTRAL to the DRIVE position and vice versa without actuation of the pawl by depression of the button 16D. Shifter 140 includes a conventional rooster comb 150 including a plurality of teeth 151 on the base 142 of lever 4D, and an engagement member 152 that is biased into engagement with the detents 151 by a spring 153. Thus, although actuation of the pawl 15D is not required to move from the NEUTRAL to the DRIVE position and vice versa when the pawl 15D is then in the cavity 147, the rooster comb 150 provides a detent function, thereby maintaining the shift lever 4D in the desired position. A wall 145 separates the cavity 147 from an adjacent cavity 155. Cavity 155 of shift gate 10D corresponds to the lower DRIVE positions D3, D2, and D1. Thus, the pawl 15D must be actuated by depressing button 16D to move from cavity 147 to cavity 155 and vice versa, but an operator can shift between the D3, D2, and D 1 positions without actuation of pawl 15D via button 16D. A conventional connector 156 and control cable 157 are operably connected to the vehicle transmission to control the transmission based upon the movement of the shift lever 4D.

A shifter according to another aspect of the present invention is illustrated in Figs. 26 and 27. Shifter 160 includes a shift lever 4E that can be moved in a "+" 161 illustrated in Fig. 27. Shift pattern 161 includes a DRIVE position 162, a REVERSE position 163, a NEUTRAL position 164, and a PARK position 165. Shift lever 4E includes a spherical ball 166 at a lower end thereof. The ball 166 has an indentation 167 that receives a pawl 168 that is coupled to a solenoid 170 by a dampen coupler 169. Accordingly, actuation of solenoid 170 is required to retract pawl 168 to move shift lever 4E out of the center position 176. A plurality of plungers 173 are spring biased via springs 173 to thereby bias the lever 4E into the center position 176. A plunger 173 and spring 174 is provided at each of the gear positions DRIVE 162, REVERSE 163, NEUTRAL 164 and PARK 165, such that the shift lever 4E is biased into the center position. Plungers 174 contact resilient dampening o-rings 175 on shift lever 4E. Ball 166 is slidably received in upper ring 171 and lower ring 172 that are retained by upper housing 177, intermediate housing member 178, and lower housing 179. Pins 180 and 181 extend from the ball 166 in opposite directions, and are received in slots 182 and 183, respectively, and lower housing 179. Pins 180 and 181 prevent rotation of the handle 4E about its axis 184, but permit rotation of the lever 4E into the DRIVE 162, REVERSE 163, NEUTRAL 164, and PARK 165 positions.

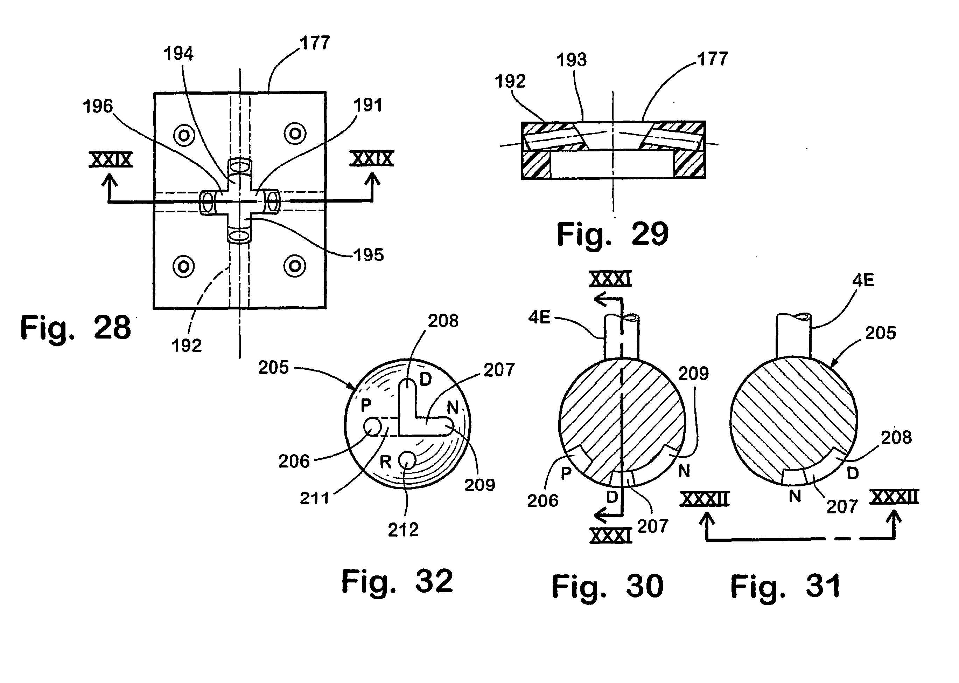

A guide member 185 is secured to the lower housing 179, and retains the pawl 168, and also receives loads input into handle 4E by an operator when pawl 168 is in engagement with indentation 168 in ball 166. Pawl 168 has a nail-like shape including a pin portion 186, and an integral flat circular head 187. Similarly, rod 188 extending from solenoid 170 includes a flat circular head 189 that contacts the head 187 of pawl 168. A ring-like resilient member 190 extends around the heads 187 and 189 to thereby interconnect the pawl 168 to the rod 188. However, resilient member 190 is somewhat flexible, and thereby permits the pawl 168 to shift horizontally slightly upon application of a force to shift lever 4E when pawl 168 is locked, such that head 187 shifts relative to head 189 without transferring substantial force to the solenoid 170. Because the pin portion 186 of pawl 168 is closely received in guide 185, forces transferred to pawl 168 are therefore transferred into guide 185 rather than into the pawl 170. All of the embodiments of the shifter described in the present application may include a guide and coupler similar to the arrangement illustrated in Fig. 26 to ensure that loads applied to the shift handle when the pawl is locked are transferred into the base of the shifter, rather than into the solenoid. However, such a guide and coupler are not generally required if the toggle mechanism illustrated in Fig. 22 is utilized, because the toggle mechanism itself transfers the force to the base of the shifter. With further reference to Figs. 28 and 29, upper housing 177 includes a large opening 191 with a forwardly extending portion 194 corresponding to the drive gear position 162 and a rearwardly extending portion 195 that corresponds to the rear gear position 163. Portions 196 and 197 of opening 191 extend in opposite directions to form the NEUTRAL position 164 and park position 165, respectively. Four passageways 192 receive the plungers 173 and springs 174 (Fig. 26), and form openings 193 facing the aperture 191.

With reference to Fig. 26, controller 20 is operably coupled to sensors 203 in the vehicle that determine the velocity of the vehicle in the forward and/or reverse directions. Switches or sensors 198 are operably connected to the controller 20 and generate a signal corresponding to the gear position (P, R, N, D) the lever 4E is in. Controller 20 is also operably connected to a sensor that determines if the brake pedal 199 is depressed, and also determines if a key is present in the ignition cylinder 200, and if the key in the ignition 200 is in the run position. Controller 20 is also electrically coupled to an automatic transmission 201, and a visual indicator 202 that provides a visual display such as a lighted D, R, P or N indicating the gear that the transmission 201 is presently in.

During operation, controller 20 will lock the pawl 168 if the brake pedal 199 is not depressed, and there is not a key in the ignition 200 in the run position. Thus, when an operator first enters the vehicle, the lever 4E cannot be moved until the operator depresses the brake pedal 199, and also has a key in the ignition 200 in the run position. If these conditions are met, controller 20 actuates solenoid 170 to retract pawl 168. During normal operation of the vehicle, the pawl 168 remains in the retracted position, such that the shift lever 4E can be moved ("tapped") forward, reverse, or side-to-side by the vehicle operator. When the vehicle is again stopped, and the transmission 201 is put in PARK by tapping lever 4E into the PARK 165 position, controller 20 will engage pawl 168 upon removal of a key from the ignition 200. Alternately, the pawl 168 could be eliminated entirely, such that shift lever 4E is always free to move.

If an operator has disengaged pawl 168 by depressing brake pedal 199 and placing a key in the ignition 200 in the run position, the operator can then select the desired gear by tapping the shift lever 4E in the desired direction. If the driver taps the shift lever 4E into the drive gear position 162, transmission 201 will be moved to DRIVE. Alternately, if the shift lever 4E is tapped towards the REVERSE position 163, the transmission 201 will be shifted to the REVERSE position. Similarly, transmission 201 will be shifted to the NEUTRAL position if the shift lever 4E is moved towards the NEUTRAL gear position 164.

Controller 20 is connected to sensors that determine the vehicle speed in the forward and/or reverse directions. Controller 20 may also be connected to sensors 203 that determine other vehicle operating parameters, such as the amount of displacement of the accelerator pedal in the vehicle, engine rpm, steering wheel angle, vehicle acceleration into the forward or rear direction, vehicle lateral acceleration, or other vehicle operating parameters. When the operator taps the shift lever 4E into, for example, the REVERSE position 163, controller 20 may be configured such that transmission 201 is not shifted to the REVERSE gear position based upon the vehicle operating parameters. For example, if the vehicle is moving forward at or above a preselected speed such as 10 mph, and the operator taps the shift lever to the REVERSE gear 163, controller 20 would not change the gear position of transmission 201 to the REVERSE position because the vehicle is traveling forward a velocity above the predetermined limit. Similarly, if the vehicle is traveling in REVERSE at above a preselected speed, controller 20 would not shift transmission 201 to the DRIVE position even if the operator tapped the shift lever 4E towards the DRIVE position 162. Also, controller 20 may be programmed such that transmission 201 is not shifted into the PARK position upon movement of the shift lever 4E into the PARK selection position 165 if the vehicle is traveling above a preselected velocity in the forward and/or reverse directions and/or the brake pedal is not depressed. Similarly, controller 20 could also limit gear changes in transmission 201 based upon other operating parameters. For example, if the transmission 201 is in the NEUTRAL position and the engine rpm is above a preselected speed, such as, for example, 3,000 rpm, controller 20 would not shift transmission 201 into REVERSE or DRIVE if shift lever 4E were tapped toward the REVERSE or DRIVE positions by an operator. If the operator attempts to change gear positions and controller 20 determines that such a gear change is not permitted, an indicator 202 flashes, beeps, or provides other suitable indications to the operator that the requested gear change did not occur.

With further reference to Figs. 30 and 31, in another embodiment of the shifter illustrated in Fig. 26, an additional indentation or cavity 206 corresponding to the PARK 165 could be provided, such that the pawl could be actuated to lock the shift lever 4E in the PARK position. Also, a slot 207 may be provided in sphere 205 permitting movement between the DRIVE position 162 and the NEUTRAL position 164 without actuation of pawl 168. Slot 207 includes an end portion 208 corresponding to the DRIVE gear position 162, and another end 209 corresponding to the NEUTRAL gear position 164. Also, slot 207 may include a ramp 211 adjacent the indentation 206 for the PARK gear position, such that the pawl 168 will slide up the ramp surface 211 without actuation of solenoid 170 to permit movement from the center position 176 to the PARK position 164 without actuation of solenoid 170. However, if a ramp 211 is utilized, solenoid 170 would need to be actuated to engage the pawl from the indentation 206 to move the shift lever 4E out of the PARK position 165. An opening 212 may also be provided to lock shift lever 4E in the REVERSE position 163. If the sphere 205 is used, the shift lever 4E will include a push button 16 to permit actuation of pawl 168 by the vehicle operator.

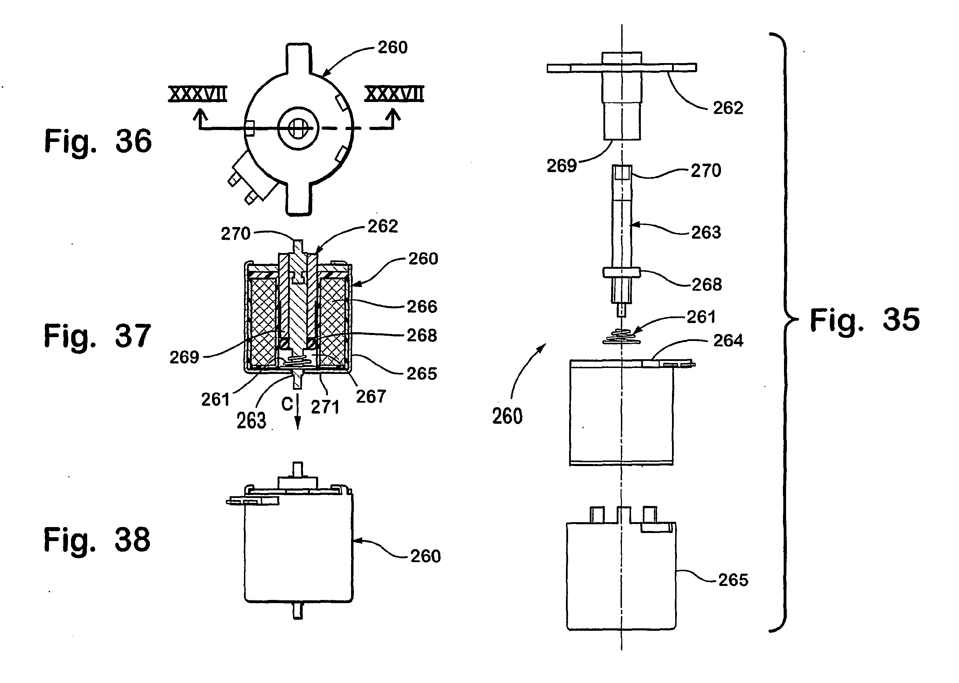

With further reference to Figs. 33 and 34, a shifter 215 includes a base 216 with bearings 218 that rotatably support a housing 217. Housing 217 pivots in a side-to-side manner on base 216 about axis 219 as indicated by the arrow "A". Shift lever 4F is rigidly connected to a saddle bracket 220. Saddle bracket 220 is pivotably mounted to the housing 217 via bosses 222, and pivots about the axis 223 in a forward and rearward direction about the axis 223. A cover plate 225 (Fig. 35) includes an "H" shaped opening 224 through which shift lever 4F extends when in an assembled position. The opening 224 thereby constrains the motion of the shift lever 4F, and provides a first shift lane 226 that includes PARK, REVERSE, NEUTRAL, and DRIVE gear positions. A second shift lane 227 is connected to the shift lane 226 by a transverse crossover lane 228. The second shift lane 227 includes "+" and "-" gear positions. During operation, shift lever 4F is biased into the center 229 of shift lane 227. The vehicle operator can up or down shift one gear by tapping the shift lever forward to the "+" position, or "-" position, respectively.

A solenoid 230 is mounted within the housing 217. A pawl 231 in the form of a pin engages openings 232, 233 and 234 in sidewall 235 of saddle bracket 220. The openings 232, 233 and 234 thereby form a shift gate 236. The 232 opening corresponds to a PARK gear position, and opening 233 corresponds to the REVERSE gear position. Opening 234 is elongated, and a first end 234 of opening 234 corresponds to a DRIVE gear position, and a second end 238 of opening 234 corresponds to a NEUTRAL gear position. A rooster comb 239 is mounted on a lower surface of upper cross wall 242 of saddle bracket 220. Rooster comb 239 includes a plurality of notches 240. An engagement member 241 is biased into engagement with the rooster comb 239 to thereby retain the shift lever 4F in the DRIVE or NEUTRAL gear positions when pawl 231 is positioned within opening 234. Also, rooster comb 239 provides tactile feedback to the operator when pawl 231 is retracted, and shift lever 4F is moved between the gear positions. A second rooster comb 244 is mounted to the lower surface of cover plate 225 to control side-to-side rotation of shift lever 4F about axis 219 when the shift lever 4F is being moved from the first shift lane 226 to the second shift lane 227, and vice versa. A second engagement member 243 is biased upwardly into engagement with the second rooster comb 244, and retains the shift lever 4F in the first shift lane 226 when engaging a first notch 245, and retains the shift lever 4F in the second shift lane 227 when engaging the second notch 246.

With reference to Fig. 34, an extension or button 247 extends from solenoid 230 in a direction opposite the pawl or pin 231. Button 247 is mechanically connected to the center pole and pawl 231 of solenoid 230. The button 247 thereby provides a manual release for pawl 231 to permit manual shifting of pawl 231 out of engagement with openings 232, 233, or 234 in the event the vehicle loses electrical power. The manual override provided by button 247 can therefore be used to disengage pawl 231 regardless of the gear position (i.e., DRIVE, NEUTRAL, REVERSE, or PARK).

Shifter 215 is a shift-by-wire shifter, such that the position of shift lever 4F is determined by sensors (or switches), and an electrical signal is sent to the controller 20 corresponding to the gear position of the shift lever 4F. Housing 217 includes a boss 250 (Fig. 33) that is rotatably received in opening 251 of saddle bracket 220. An extension or tab 252 extends outwardly from the end of boss 250. An analog rotary position sensor 253 is secured to saddle bracket 220 via mounting openings 254. Pivoting of shift lever 4F about axis 223 causes saddle bracket 220 and proximity sensor 253 to rotate relative to tab 252, and an analog rotary position sensor 253 thereby determines the angular position of saddle bracket 220. An analog rotary position sensor 253 thereby provides controller 20 with a signal corresponding to the position of shift lever 4F corresponding to the PARK, REVERSE, NEUTRAL and DRIVE positions when shift lever 4F is in first shift lane 226, and also provides controller 20 with the position of the shift lever 4F corresponding to the "+" and "--" (i.e., upshift and downshift) positions when shift lever 4F is in the second shift lane 227. A switch or sensor 255 is mounted on flange 256 of base 218. As shift lever 4F and saddle bracket 220 are moved side-to-side about axis 218 between first shift lane 226 and second shift lane 227, tab 257 contacts switch 255 when in the second shift lane 227, thereby providing a signal to controller 20 indicating whether the shift lever 4F is in the first shift lane 226 or the second shift lane 227. The controller can thereby determine what gear position the shift lever is in at all times. A push button 16F on shift lever 4F provides for operator input to controller 20 to actuate pawl 231.

Controller 20 may be programmed to prevent overheating of solenoid 12 that would otherwise occur if an operator pushed button 16 continuously for a long period of time. Controller 20 may include a timer such that if the button is held for a predetermined time (e.g. 1 minute), controller 20 would deactivate solenoid 12, such that the pawl would again engage the shift gate 10 and lock the shifter unless the button was pressed again. The length of time can be set as required for a particular application. For example, the solenoid could be deactivated by controller 20 after button 16 is continuously depressed for times ranging from 1 minute to 24 hours, such as 10 minutes, 20 minutes, 45 minutes or one, two, or three hours. Alternately, a continuous duty solenoid capable of being actuated for long periods of time may be utilized. Overheating of solenoid 12 may also be prevented by configuring controller 20 to provide Pulse Width Modulation (PWM) of the electrical power to solenoid 12. Use of a PWM controlled solenoid driver eliminates the need for a continuous duty solenoid and/or time deactivation of the solenoid. Alternately, to prevent overload or overheating of the solenoid or actuator, a continuous duty solenoid may be utilized.

As discussed above, various solenoids may be utilized with the shifters described in more detail above. A solenoid 260 according to one aspect of the present invention is illustrated in Figs. 35-38. Solenoid 260 includes a spring 261, center pole assembly 262, rod 263, coil bobbin assembly 264 and a housing 265. Rod 263 has a permanent magnet 268 attached thereto that is normally attracted to the end 269 of center pole assembly 262 due to the magnetic attraction of magnet 268 to the end 269 of center pole assembly 262. When a current is applied to coil 266 in the correct direction to generate an opposing polar arrangement to the permanent magnet 268, the rod 263 will shift in the direction of the arrow "C" (Fig. 37). When the current to the coil 266 is turned off, the rod 263 will shift opposite the direction of the arrow "C" due to the attraction of the magnet 268 to the end 269 of center pole assembly 262. Thus, solenoid 260 utilizes the permanent magnet 268 as a means to bias the rod 263 in the extended position, rather than a return spring. Spring 261 is a relatively light spring disposed within gap 267 to increase the working distance of the solenoid by ensuring that the permanent magnet 268 in rod 263 is returned to the attraction region to end 269 of center pole assembly 262 to ensure that the rod 263 returns to the extended position when coil 266 is de-energized. In general, spring 261 does not generate a force acting on rod 263 throughout the range of motion of rod 263, but only serves to ensure that beyond the attraction region to end 269 of center pole assembly 262, there is sufficient return bias to promote magnet 268 back to the attraction region to end 269 of center pole assembly 262 that will return rod 263. A suitable pawl configured to engage a shift gate may be mounted to the end 270 of rod 263.

Solenoid 260 has numerous advantages over conventional solenoids utilizing a return spring. Magnet 268 provides a relatively strong force when in contact with end 269 of center pole assembly 262, thereby ensuring that rod 263 and the pawl do not jar or move out of engagement due to vibrations or bumps encountered during operation of the vehicle. Furthermore, a relatively low electrical current in coil 266 is required to retract the rod 263 and mounted pawl relative to a conventional solenoid utilizing a return spring and having an equivalent travel, holding force, and pull-in force. The solenoid 260 may be oriented horizontally or vertically according to the various aspects of the shifters described above. In one such arrangement, solenoid 260 is oriented with end 270 extending horizontally, such that neither gravitational nor forces acting with the predominant direction of vehicular jarring on rod 263 are a factor in the direction of solenoid actuation to further ensure that the pawl is not disengaged due to vibration or bumps. With appropriate orientation and geometry of these internal components, the solenoid is designed so as to provide a favorable force vs. displacement relationship, and function can be optimized for individual requirements in this application.

It will be appreciated that the powered pawl and controller arrangement of the present invention may also be utilized to control vehicles that do not have a "conventional" automatic transmission. For example, electric vehicles and the like include an input member that can be moved by the vehicle operator to control the vehicle direction. Such input control members may include FORWARD and REVERSE positions, as well as an OFF and/or PARK position. In addition to the park lock features to prevent movement of the control member from the PARK or OFF position, a powered solenoid according to the present invention may be utilized to selectively control the movement of the input member based upon vehicle operating conditions in substantially the same manner as discussed above. For example, if the control member includes an OFF control position, as well as FORWARD and REVERSE control positions, the pawl may be operably coupled to a controller to prevent movement by an operator from the FORWARD power position to the REVERSE control position if the vehicle is moving in a forward direction at above a predetermined velocity. Similarly, the controller may be programmed to prevent movement of the control member from the REVERSE position to the FORWARD position if the vehicle is traveling rearwardly at a speed above a preselected amount. Also, the controller could be programmed to prevent actuation of the pawl, and thereby prevent movement of the input control member from the OFF or PARK position to either the FORWARD or REARWARD power positions if the brake pedal is not depressed, and/or a security device such as a conventional key is not present in the "ignition", or if a "keyless" security system is not actuated by the presence of the proper security signal.

## Claims

1. A shifter (1) for motor vehicle transmissions, comprising:
a base (2);
a shift member (4) movably associated with the base for movement to a plurality of gear positions;
a powered pawl mechanism (14) configured to selectively restrict movement of the shift member; and
a controller (20) configured to control the powered pawl mechanism based at least in part upon at least one vehicle operating parameter other than the position of the brake pedal and vehicle ignition; and **characterised by**
a movable member (16) on the shift member which is shiftable between first and second positions; the controller being arranged to control the powered pawl mechanism based at least in part on the number of times the movable member is shifted between the first and second positions.

2. The shifter of Claim 1, wherein:
the powered pawl mechanism (14) includes a pawl member (15) and a shift gate (10), and wherein the pawl member is selectively shifted into engagement with the shift gate.

3. The shifter of Claim 1, in which the movable member (16) comprises:
an input device (16) permitting an operator to provide the controller with a signal, the controller being arranged to control the powered pawl mechanism (14) based at least in part on the signal.

4. The shifter of any preceding claim, wherein:
the shift member (14) comprises a shift lever.

5. The shifter of any preceding claim, wherein:
the movable member (16) comprises a button that translates linearly.

6. The shifter of Claim 4 wherein:
the controller (20) is arranged to control the powered pawl mechanism (14) based at least in part on a selected one of the position, velocity, and acceleration of the movable member.

7. The shifter of Claim 1, including:
a release mechanism permitting an operator to manually control the powered pawl mechanism.

8. The shifter of Claim 1, in which:
the controller (20) is arranged to determine at least a selected one of the position, velocity and acceleration of the shift member and is arranged to control the powered pawl mechanism based at least in part on the selected one of the position, velocity and acceleration.

## Patentansprüche

1. Schaltvorrichtung (1) für Kraftfahrzeuggetriebe, umfassend:
eine Basis (2);
ein Schaltteil (4), das für die Bewegung an eine Mehrzahl von Getriebepositionen beweglich mit der Basis verbunden ist;
ein angetriebener Einrastmechanismus (14), der konfiguriert ist, die Bewegung des Schaltteils selektiv zu beschränken;
und
eine Steuerung (20), die konfiguriert ist, den angetriebenen Einrastmechanismus zumindest teilweise auf der Grundlage zumindest eines Fahrzeugbetriebsparameters außer der Position des Bremspedals und der Fahrzeugzündung zu steuern; und **gekennzeichnet durch**
ein bewegliches Bauteil (16) am Schaltteil, das zwischen einer ersten und einer zweiten Position verschoben werden kann, wobei die Steuerung angeordnet ist, den angetriebenen Einrastmechanismus zumindest teilweise auf der Grundlage der Anzahl der Zeitpunkte zu steuern, zu denen das bewegliche Bauteil zwischen der ersten und zweiten Position verschoben wird.

2. Schaltvorrichtung nach Anspruch 1, wobei:
der angetriebene Einrastmechanismus (14) ein Einrastteil (15) und eine Schaltkulisse (10) enthält, und wobei das Einrastteil selektiv in Eingriff mit der Schaltkulisse geschoben wird.

3. Schaltvorrichtung nach Anspruch 1, wobei das bewegliche Bauteil (16) Folgendes umfasst:
eine Eingabevorrichtung (16), die es einem Betreiber gestattet, ein Signal an die Steuerung bereitzustellen, wobei die Steuerung angeordnet ist, den angetriebenen Einrastmechanismus (14) zumindest teilweise auf der Grundlage des Signals zu steuern.

4. Schaltvorrichtung nach einem der vorhergehenden Ansprüche, wobei:
das Schaltteil (4) einen Schalthebel umfasst.

5. Schaltvorrichtung nach einem der vorhergehenden Ansprüche, wobei:
das bewegliche Bauteil (16) einen Knopf umfasst, der linear verschiebbar ist.

6. Schaltvorrichtung nach Anspruch 4, wobei:
die Steuerung (20) angeordnet ist, den angetriebenen Einrastmechanismus (14) zumindest teilweise auf der Grundlage eines ausgewählt aus Position, Geschwindigkeit und Beschleunigung des beweglichen Bauteils zu steuern.

7. Schaltvorrichtung nach Anspruch 1, enthaltend:
einen Lösungsmechanismus, der es einem Betreiber gestattet, den angetriebenen Einrastmechanismus manuell zu steuern.

8. Schaltvorrichtung nach Anspruch 1, bei der:
die Steuerung (20) angeordnet ist, zumindest eines ausgewählt aus Position, Geschwindigkeit und Beschleunigung des Schaltteils zu bestimmen, und angeordnet ist, den angetriebenen Einrastmechanismus zumindest teilweise auf der Grundlage des ausgewählten aus Position, Geschwindigkeit und Beschleunigung zu steuern.

## Revendications

1. Changement de vitesse (1) pour des transmissions de véhicule à moteur, comprenant :
une base (2) ;
un élément de changement de vitesse (4) associé de manière mobile à la base afin de permettre un mouvement vers une pluralité de positions d'engrenage ;
un mécanisme de cliquet motorisé (14) conçu pour limiter de façon sélective le mouvement de l'élément de changement de vitesse ; et
un dispositif de commande (20) conçu pour contrôler le mécanisme de cliquet motorisé sur base au moins en partie d'au moins un paramètre opérationnel du véhicule autre que la position de la pédale de frein et l'allumage du véhicule ; et **caractérisé par** :
un élément mobile (16) sur l'élément de changement de vitesse qui est déplaçable entre des première et deuxième positions ; le dispositif de commande étant disposé pour contrôler le mécanisme de cliquet motorisé sur base au moins en partie du nombre de fois que l'élément mobile est déplacé entre les première et deuxième positions.

2. Changement de vitesse selon la revendication 1, dans lequel :
le mécanisme de cliquet motorisé (14) comprend un élément de cliquet (15) et une porte de changement de vitesse (10), et dans lequel l'élément de cliquet est amené de façon sélective en engrènement avec la porte de changement de vitesse.

3. Changement de vitesse selon la revendication 1, dans lequel l'élément mobile (16) comprend : un dispositif d'entrée (16) permettant à un opérateur de fournir au dispositif de commande un signal, le dispositif de commande étant disposé pour contrôler le mécanisme de cliquet motorisé (14) sur base au moins en partie du signal.

4. Changement de vitesse selon l'une quelconque des revendications précédentes, dans lequel :
l'élément de changement de vitesse (14) comprend un levier de changement de vitesse.

5. Changement de vitesse selon l'une quelconque des revendications précédentes, dans lequel :
l'élément mobile (16) comprend un bouton qui effectue une translation linéaire.

6. Changement de vitesse selon la revendication 4, dans lequel :
le dispositif de commande (20) est disposé pour contrôler le mécanisme de cliquet motorisé (14) sur base au moins en partie d'un élément choisi parmi la position, la vitesse et l'accélération de l'élément mobile.

7. Changement de vitesse selon la revendication 1, comprenant :
un mécanisme de libération permettant à un opérateur de contrôler manuellement le mécanisme de cliquet motorisé.

8. Changement de vitesse selon la revendication 1, dans lequel :
le dispositif de commande (20) est disposé pour déterminer au moins un élément choisi parmi la position, la vitesse et l'accélération de l'élément de changement de vitesse et est disposé pour contrôler le mécanisme de cliquet motorisé sur base au moins en partie de l'élément choisi parmi la position, la vitesse et l'accélération.
